# EUROPÄISCHE PATENTSCHRIFT

(11) **EP 3 970 324 B1**
(45) Veröffentlichungstag und Bekanntmachung des Hinweises auf die Patenterteilung: **03.05.2023**
(21) Anmeldenummer: 20724076.3
(22) Anmeldetag: 05.05.2020
(51) Int. Cl.: H04L 12/40, G06F 13/42

(54) **SENDE-/EMPFANGSEINRICHTUNG UND KOMMUNIKATIONSSTEUEREINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
TRANSMITTING/RECEIVING DEVICE AND COMMUNICATION CONTROL DEVICE FOR A SUBSCRIBER STATION OF A SERIAL BUS SYSTEM, AND METHOD FOR COMMUNICATION IN A SERIAL BUS SYSTEM
DISPOSITIF ÉMETTEUR/RÉCEPTEUR ET DISPOSITIF DE COMMANDE DE COMMUNICATION POUR UNE STATION D'ABONNÉ D'UN SYSTÈME DE BUS SÉRIE ET PROCÉDÉ DE COMMUNICATION DANS UN SYSTÈME DE BUS SÉRIE

(30) Priorität: 16.05.2019 DE 102019207174
(43) Veröffentlichungstag der Anmeldung: 23.03.2022
(73) Patentinhaber: Robert Bosch GmbH, 70442 Stuttgart (DE)
(72) Erfinder: HARTWICH, Florian, 72762 Reutlingen (DE); WALKER, Steffen, 72770 Reutlingen (DE); MUTTER, Arthur, 73765 Neuhausen (DE)
(86) Internationale Anmeldenummer: PCT/EP2020/062404
(87) Internationale Veröffentlichungsnummer: WO 2020/229221

(56) Entgegenhaltungen:
- EP-A1- 2 940 935
- US-A1- 2014 365 693
- US-A1- 2016 344 552

## Beschreibung

### Technisches Gebiet

Die vorliegende Erfindung betrifft eine Sende-/Empfangseinrichtung und eine Kommunikationssteuereinrichtung für eine Teilnehmerstation eines seriellen Bussystems und ein Verfahren zur Kommunikation in einem seriellen Bussystem, das mit hoher Datenrate und großer Fehlerrobustheit arbeitet.

### Stand der Technik

Für die Kommunikation zwischen Sensoren und Steuergeräten, beispielsweise in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen.

Mit steigender Anzahl an Funktionen einer technischen Anlage bzw. eines Fahrzeugs, nimmt auch der Datenverkehr im Bussystem zu. Noch dazu ist es oft gefordert, dass die Daten schneller vom sendenden Busteilnehmer zum empfangenden Busteilnehmer zu übertragen sind als bisher. Folge davon ist, dass die geforderte Bandbreite des Bussystems weiter steigen wird.

Um Daten mit höherer Bitrate übertragen zu können als bei CAN, wurde im CAN FD Nachrichten-Format eine Option zur Umschaltung auf eine höhere Bitrate innerhalb einer Nachricht geschaffen. Bei solchen Techniken wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet. Bei CAN FD ist die Nutzdatenlänge von 8 auf bis zu 64 Bytes erweitert und sind die Datenübertragungsraten deutlich höher als bei CAN.

Auch wenn ein CAN oder CAN FD basiertes Kommunikationsnetzwerk im Hinblick auf beispielsweise seine Robustheit sehr viele Vorteile bietet, hat es doch eine deutlich geringere Schnelligkeit im Vergleich zu einer Datenübertragung bei zum Beispiel 100 Base-T1 Ethernet. Außerdem ist die bisher mit CAN FD erreichte Nutzdatenlänge von bis zu 64 Bytes für einige Anwendungen zu gering. Ein CAN FD-Nachfolge-Bussystem soll mindestens derartige Anforderungen erfüllen.

EP 2 940 935 A1 offenbart eine Vorrichtung und ein Verfahren zur Steuerung von CAN-Bus-Kommunikation. US 2016/0344552 A1 bezieht sich auf eine konfigurierbare Verschlüsselungsvorrichtung für CAN. US 2014/0365693 A1 zeigt eine Vorrichtung und ein Verfahren für einen CAN-Bus, über den CAN-FD-fähige und nicht-CAN-FD-fähige Teilnehmerstationen kommunizieren. Keines dieser Dokumente zeigt einen Betriebsart-Umschaltblock, wie in der nachfolgenden Beschreibung und den Ansprüchen beschrieben.

### Offenbarung der Erfindung

Daher ist es Aufgabe der vorliegenden Erfindung, eine Sende-/Empfangseinrichtung und eine Kommunikationssteuereinrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Sende-/Empfangseinrichtung und eine Kommunikationssteuereinrichtung für eine Teilnehmerstation eines seriellen Bussystems und ein Verfahren zur Kommunikation in einem seriellen Bussystem bereitgestellt werden, bei welchen bei großer Fehlerrobustheit eine hohe Datenrate und eine Steigerung der Menge der Nutzdaten pro Rahmen realisiert werden kann.

Die Aufgabe wird durch eine Sende-/Empfangseinrichtung für eine Teilnehmerstation eines seriellen Bussystems mit den Merkmalen von Anspruch 1 gelöst. Die Sende-/Empfangseinrichtung hat einen ersten Anschluss zum Empfang eines Sendesignals von einer Kommunikationssteuereinrichtung, einen Sender zum Senden des Sendesignals auf einen Bus des Bussystems, bei welchem Bussystem zum Austausch von Nachrichten zwischen Teilnehmerstationen des Bussystems mindestens eine erste Kommunikationsphase und eine zweite Kommunikationsphase verwendet werden, einen Empfänger zum Empfang des Signals von dem Bus, wobei der Empfänger ausgestaltet ist, aus dem von dem Bus empfangenen Signal ein digitales Empfangssignal zu erzeugen, einen zweiten Anschluss zum Senden des digitalen Empfangssignals an die Kommunikationssteuereinrichtung und zum Empfang eines zusätzlichen Signals von der Kommunikationssteuereinrichtung, und einen Betriebsart-Umschaltblock zur Auswertung des von dem Empfänger ausgegebenen Empfangssignals und eines an dem zweiten Anschluss von der Kommunikationssteuereinrichtung empfangenen Signals, wobei der Betriebsart-Umschaltblock ausgestaltet ist, den Sender und/oder den Empfänger abhängig von einem Ergebnis der Auswertung in eine von mindestens zwei verschiedenen Betriebsarten zu schalten und mindestens eine vorbestimmte Betriebsart der Betriebsarten nach Ablauf einer Zeitdauer, die bei dem Betriebsart-Umschaltblock für eine zusätzliche interne Kommunikation zwischen der Kommunikationssteuereinrichtung und der Sende-/Empfangseinrichtung über den zweiten Anschluss voreingestellt ist, in eine andere der Betriebsarten umzuschalten.

Mit der Sende-/Empfangseinrichtung ist es insbesondere möglich, dass insbesondere bei der Umschaltung zwischen einer ersten Kommunikationsphase und einer zweiten Kommunikationsphase eine Kommunikation zwischen der Kommunikationssteuereinrichtung und der Sende-/Empfangseinrichtung stattfinden kann, ohne dass zusätzliche teure Anschlüsse zwischen der Kommunikationssteuereinrichtung und der Sende-/Empfangseinrichtung notwendig wären. Hierbei ist je nach Bedarf nur eine Kommunikation in einer Richtung möglich. Alternativ kann jedoch zunächst eine Kommunikation beispielsweise von der Kommunikationssteuereinrichtung zu der Sende-/Empfangseinrichtung erfolgen und anschließend von der Sende-/Empfangseinrichtung zu der Kommunikationssteuereinrichtung.

Außerdem kann mit der Sende-/Empfangseinrichtung in einer der Kommunikationsphasen eine von CAN bekannte Arbitration beibehalten werden und dennoch die Übertragungsrate gegenüber CAN oder CAN FD nochmals beträchtlich gesteigert werden. Dies kann dadurch erreicht werden, dass zwei Kommunikationsphasen mit unterschiedlicher Bitrate verwendet werden und der Beginn der zweiten Kommunikationsphase, in welcher die Nutzdaten mit höherer Bitrate als in der Arbitration übertragen werden, für die Sende-/Empfangseinrichtung sicher kenntlich gemacht wird. Daher kann die Sende-/Empfangseinrichtung sicher von einer ersten Kommunikationsphase in die zweite Kommunikationsphase umschalten. Als Folge davon ist eine deutliche Steigerung der Bitrate und damit der Übertragungsgeschwindigkeit von Sender zum Empfänger realisierbar. Hierbei ist jedoch gleichzeitig eine große Fehlerrobustheit gewährleistet. Dies trägt mit dazu bei, eine Nettodatenrate von mindestens 10 Mbps zu realisieren. Noch dazu kann die Größe der Nutzdaten größer als 64 Byte sein, insbesondere bis zu 4096 Byte pro Rahmen betragen, oder je nach Bedarf eine beliebige Länge haben.

Das von der Sende-/Empfangseinrichtung durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Sende-/Empfangseinrichtung sind in den abhängigen Ansprüchen angegeben.

Optional ist der Betriebsart-Umschaltblock ausgestaltet, den Sender und/oder den Empfänger abhängig von einem Ergebnis der Auswertung in eine von mindestens drei verschiedenen Betriebsarten zu schalten und mindestens eine vorbestimmte Betriebsart der drei Betriebsarten nach Ablauf einer bei dem Betriebsart-Umschaltblock voreingestellten Zeitdauer in eine andere der mindestens drei Betriebsarten umzuschalten. Hierbei ist die mindestens eine vorbestimmte Betriebsart die interne Kommunikation zwischen der Kommunikationssteuereinrichtung und der Sende-/Empfangseinrichtung über den zweiten Anschluss realisiert.

Der Betriebsart-Umschaltblock kann ausgestaltet sein, den Sender in der mindestens einen vorbestimmten Betriebsart abzuschalten.

Möglicherweise ist der Sender ausgestaltet, in der ersten Kommunikationsphase Bits der Signale auf den Bus mit einer ersten Bitzeit zu treiben, die um mindestens den Faktor 10 größer als eine zweite Bitzeit von Bits ist, die der Sender in der zweiten Kommunikationsphase auf den Bus treibt. Hierbei können die Signale über den ersten und zweiten Anschluss in der vorbestimmten Betriebsart Bits mit einer dritten Bitzeit haben, die kleiner als die zweite Bitzeit ist.

Die zuvor genannte Aufgabe wird zudem durch eine Kommunikationssteuereinrichtung für eine Teilnehmerstation eines seriellen Bussystems mit den Merkmalen von Anspruch 8 gelöst. Die Kommunikationssteuereinrichtung hat ein Kommunikationssteuermodul zum Erzeugen eines Sendesignals zum Steuern einer Kommunikation der Teilnehmerstation mit mindestens einer anderen Teilnehmerstation des Bussystems, bei welchem Bussystem zum Austausch von Nachrichten zwischen Teilnehmerstationen des Bussystems mindestens eine erste Kommunikationsphase und eine zweite Kommunikationsphase verwendet werden, einem ersten Anschluss zum Senden des Sendesignals an eine Sende-/Empfangseinrichtung, die zum Senden des Sendesignals auf einen Bus des Bussystems ausgestaltet ist, einem zweiten Anschluss zum Empfangen eines digitalen Empfangssignals von der Sende-/Empfangseinrichtung, wobei die Kommunikationssteuereinrichtung zum Erzeugen eines zusätzlichen Signals ausgestaltet ist, welches der Sende-/Empfangseinrichtung anzeigt, dass von der derzeitigen Betriebsart in eine andere Betriebsart von mindestens zwei verschiedenen Betriebsarten zu schalten ist, und welches zusätzlich für eine bei dem Kommunikationssteuermodul und einem Betriebsart-Umschaltblock der Sende-/Empfangseinrichtung voreinstellbare Zeitdauer eine interne Kommunikation zwischen dem Kommunikationssteuermodul und der Sende-/Empfangseinrichtung realisiert, und wobei das Kommunikationssteuermodul ausgestaltet ist, das zusätzliche Signal über den zweiten Anschluss an die Sende-/Empfangseinrichtung zu senden.

Die Kommunikationssteuereinrichtung bietet dieselben Vorteile, wie sie zuvor in Bezug auf die Sende-/Empfangseinrichtung genannt sind.

Die voreingestellte Zeitdauer kann in eine erste Zeitdauer, in welcher der zweite Anschluss, insbesondere durch den Betriebsart-Umschaltblock, derart betrieben wird, dass die Kommunikationssteuereinrichtung über den zweiten Anschluss Daten senden kann, und eine zweite Zeitdauer aufgeteilt ist, in welcher die Kommunikationssteuereinrichtung über den zweiten Anschluss Daten empfängt, wobei die in der voreingestellten Zeitdauer gesendeten Daten solche Daten sind, die Zusatzinformationen zu den Signalen sind, die in dem Bussystem zum Austausch von Nachrichten zwischen Teilnehmerstationen des Bussystems erzeugt werden.

Denkbar ist, dass die mindestens eine vorbestimmte Betriebsart eine Betriebsart aufweist, in welcher die Kommunikationssteuereinrichtung ausgestaltet ist, über den ersten Anschluss ein Taktsignal zu senden und im Takt des Taktsignals über den zweiten Anschluss zumindest zeitweise Daten zu senden und zumindest zeitweise Daten zu empfangen, und/oder eine Betriebsart aufweist, in welcher die Kommunikationssteuereinrichtung ausgestaltet ist, zum Datenaustausch mit der Sende-/Empfangseinrichtung eine Manchester-Kodierung für die Daten zu verwenden.

Zudem ist es in Bezug auf die Sende-/Empfangseinrichtung denkbar, dass die mindestens eine vorbestimmte Betriebsart eine Betriebsart aufweist, in welcher die Sende-/Empfangseinrichtung kein Sendesignal auf den Bus treibt.

Die Kommunikationssteuereinrichtung kann ausgestaltet sein, bei Senden einer Protokollinformation an dem Anschluss für das Sendesignal, die eine Umschaltung von der mindestens einen ersten Kommunikationsphase in die zweite Kommunikationsphase signalisiert, an dem Anschluss für das digitale Empfangssignal eine Kennung mit einem vorbestimmten Wert an den Empfänger zu senden.

Beispielsweise ist die Kennung ein Bit mit einem vorbestimmten Wert oder Pulsmuster oder die Kennung ist ein vorbestimmtes Bitmuster.

Gemäß einer Option für die Sende-/Empfangseinrichtung ist das in der ersten Kommunikationsphase von dem Bus empfangene Signal mit einem anderen Physical Layer erzeugt als das in der zweiten Kommunikationsphase von dem Bus (40) empfangene Signal.

Denkbar ist in Bezug auf die Sende-/Empfangseinrichtung, dass in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Sende-/Empfangseinrichtung und die zuvor beschriebene Kommunikationssteuereinrichtung können Teil einer Teilnehmerstation eines Bussystems sein, das zudem einen Bus und mindestens zwei Teilnehmerstationen umfasst, welche über den Bus derart miteinander verbunden sind, dass sie seriell miteinander kommunizieren können. Hierbei weist mindestens eine der mindestens zwei Teilnehmerstationen eine zuvor beschriebene Sende-/Empfangseinrichtung und eine zuvor beschriebene Kommunikationssteuereinrichtung auf.

Die zuvor genannte Aufgabe wird zudem durch ein Verfahren zur Kommunikation in einem seriellen Bussystem nach Anspruch 15 gelöst. Das Verfahren wird mit einer Teilnehmerstation für ein Bussystem ausgeführt, bei welchem zum Austausch von Nachrichten zwischen Teilnehmerstationen des Bussystems mindestens eine erste Kommunikationsphase und eine zweite Kommunikationsphase verwendet werden, wobei die Teilnehmerstation einen Sender, einen Empfänger, einen Betriebsart-Umschaltblock, einen ersten Anschluss und einen zweiten Anschluss aufweist, und wobei das Verfahren die Schritte aufweist, Empfangen, mit dem Empfänger, eines Signals von dem Bus des Bussystems, Erzeugen, mit dem Empfänger, aus dem von dem Bus empfangenen Signal eines digitalen Empfangssignals und Ausgeben des digitalen Empfangssignals an dem zweiten Anschluss, Auswerten, mit dem Betriebsart-Umschaltblock, des von dem Empfänger ausgegebenen Empfangssignals und eines an dem zweiten Anschluss von der Kommunikationssteuereinrichtung empfangenen Signals, und Schalten, mit dem Betriebsart-Umschaltblock, des Senders und/oder des Empfängers abhängig von einem Ergebnis der Auswertung in eine von mindestens zwei verschiedenen Betriebsarten und Umschalten von mindestens einer vorbestimmten Betriebsart der Betriebsarten nach Ablauf einer Zeitdauer, die bei dem Betriebsart-Umschaltblock für eine zusätzliche interne Kommunikation zwischen dem Kommunikationssteuermodul und der Sende-/Empfangseinrichtung über den zweiten Anschluss voreingestellt ist, in eine andere der Betriebsarten.

Das Verfahren bietet dieselben Vorteile, wie sie zuvor in Bezug auf die Sende-/Empfangseinrichtung und/oder die Kommunikationssteuereinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein vereinfachtes schematisches Blockschaltbild einer Teilnehmerstation des Bussystems gemäß dem ersten Ausführungsbeispiel;
Fig. 4 ein elektrisches Schaltbild eines Betriebsart-Umschaltblocks zur Umschaltung der Betriebsart einer Sende-/Empfangseinrichtung der Teilnehmerstation von Fig. 3;
Fig. 5 einen zeitlichen Verlauf eines Teils eines von der Teilnehmerstation von Fig. 3 gesendeten Sendesignals TxD gemäß dem ersten Ausführungsbeispiel, bei dem von der Arbitrationsphase als erster Betriebsart der Sende-/Empfangseinrichtung in die Datenphase als zweite Betriebsart der Sende-/Empfangseinrichtung umgeschaltet wird;
Fig. 6 einen zeitlichen Verlauf eines Empfangssignals RxD, das aus dem Sendesignal TxD von Fig. 5 bei der Teilnehmerstation von Fig. 3 resultiert;
Fig. 7 einen zeitlichen Verlauf eines Teils eines von der Teilnehmerstation von Fig. 3 gesendeten Sendesignals TxD gemäß dem ersten Ausführungsbeispiel, bei dem von der Arbitrationsphase als erster Betriebsart der Sende-/Empfangseinrichtung in eine dritte Betriebsart der Sende-/Empfangseinrichtung umgeschaltet wird;
Fig. 8 einen zeitlichen Verlauf eines Empfangssignals RxD, das aus dem Sendesignal TxD von Fig. 7 bei der Teilnehmerstation von Fig. 3 resultiert;
Fig. 9 einen zeitlichen Verlauf eines Teils eines von einer Teilnehmerstation des Bussystems gesendeten Sendesignals TxD gemäß einem zweiten Ausführungsbeispiel, bei dem von der Arbitrationsphase als erster Betriebsart der Sende-/Empfangseinrichtung in eine dritte Betriebsart der Sende-/Empfangseinrichtung umgeschaltet wird;
Fig. 10 einen zeitlichen Verlauf eines Empfangssignals RxD, das aus dem Sendesignal TxD von Fig. 9 bei der Teilnehmerstation des Bussystems resultiert; und
Fig. 11 bis Fig. 13 jeweils ein Schaubild zur Veranschaulichung des Aufbaus von Nachrichten, die zwischen der Sende-/Empfangseinrichtung und der Kommunikationssteuereinrichtung des Bussystems gemäß einem dritten bis fünften Ausführungsbeispiel bei speziellen Kommunikationsabfolgen im Bussystem ausgetauscht werden können.

In den Figuren sind gleiche oder funktionsgleiche Elemente, sofern nichts Anderes angegeben ist, mit denselben Bezugszeichen versehen.

### Beschreibung der Ausführungsbeispiele

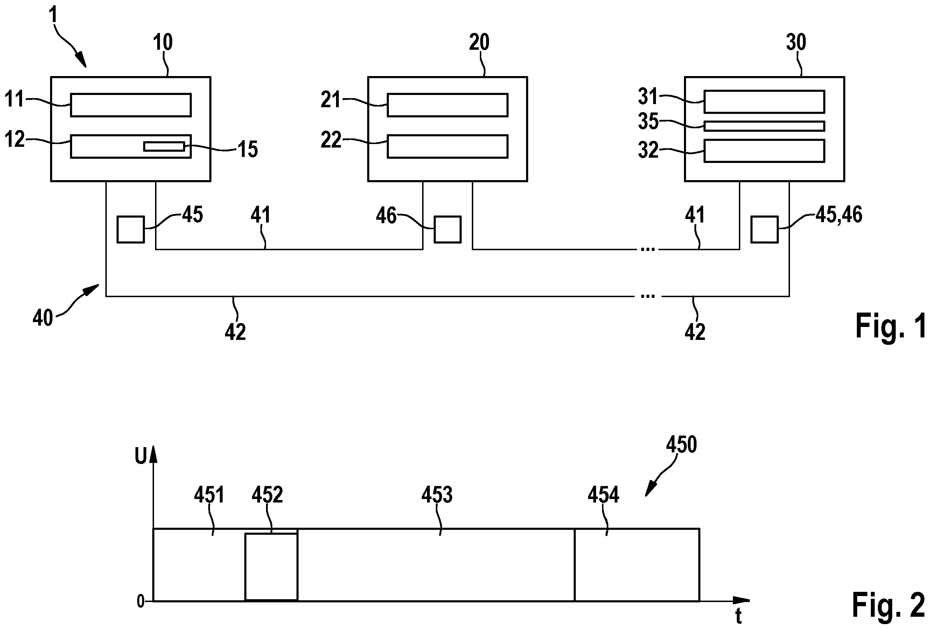

Fig. 1 zeigt als Beispiel ein Bussystem 1, das insbesondere grundlegend für ein CAN-Bussystem, ein CAN FD-Bussystem, ein CAN FD-Nachfolge-Bussystem, und/oder Abwandlungen davon, ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und einen Umschaltblock 15. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und einen Umschaltblock 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

In jeder Teilnehmerstation 10, 20, 30 werden die Nachrichten 45, 46 kodiert in Form von Rahmen über eine TXD-Leitung und eine RXD-Leitung bitweise zwischen der jeweiligen Kommunikationssteuereinrichtung 11, 21, 31 und der zugehörigen Sende-/Empfangseinrichtungen 12, 22, 32 ausgetauscht. Dies ist nachfolgend genauer beschrieben.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtungen 11, 31 erstellen und lesen erste Nachrichten 45, die beispielsweise modifizierte CAN Nachrichten 45 sind, die nachfolgend auch CAN XL Nachrichten 45 genannt werden. Hierbei sind die modifizierten CAN Nachrichten 45 oder CAN XL Nachrichten 45 auf der Grundlage eines CAN FD-Nachfolgeformats aufgebaut, das in Bezug auf Fig. 2 detaillierter beschrieben ist. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtungen 12, 32 bereitzustellen oder von dieser zu empfangen. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Controller nach ISO 11898-1:2015 ausgeführt sein, insbesondere wie ein CAN FD toleranter Classical CAN-Controller oder ein CAN FD-Controller. Die Kommunikationssteuereinrichtung 21 erstellt und liest zweite Nachrichten 46, beispielsweise Classical CAN Nachrichten oder CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Im letzteren Fall ist die Kommunikationssteuereinrichtung 21 wie ein herkömmlicher CAN FD-Controller ausgeführt.

Die Sende-/Empfangseinrichtungen 12, 32 können bis auf die nachfolgend noch genauer beschriebenen Unterschiede als CAN XL-Transceiver ausgeführt sein. Die Sende-/Empfangseinrichtungen 12, 32 sind zusätzlich oder alternativ wie ein herkömmlicher CAN FD Transceiver ausführbar. Die Sende-/Empfangseinrichtung 22 kann wie ein herkömmlicher CAN Transceiver oder CAN FD Transceiver ausgeführt sein.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Sende-/Empfangseinrichtung 12 oder der Sende-/Empfangseinrichtung 32 gesendet wird. Der CAN XL-Rahmen 450 ist für die CAN-Kommunikation auf dem Bus 40 in unterschiedliche Kommunikationsphasen 451 bis 454 unterteilt, nämlich eine Arbitrationsphase 451, eine Umschaltphase 452, die am Ende der Arbitrationsphase liegt, eine Datenphase 453 und eine Rahmenendphase 454.

In der Arbitrationsphase 451 wird beispielsweise am Anfang ein Bit gesendet, das auch SOF-Bit genannt wird und den Beginn des Rahmens bzw. Start of Frame anzeigt. In der Arbitrationsphase 451 wird außerdem ein Identifizierer mit beispielsweise 11 Bit zur Identifikation des Senders der Nachricht 45 gesendet. Bei der Arbitration wird mit Hilfe des Identifizierers bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der Umschaltphase 452 und der anschließenden Datenphase 453 einen exklusiven Zugriff auf den Bus 40 des Bussystems 1 bekommt.

In der Umschaltphase 452 wird bei dem vorliegenden Ausführungsbeispiel die Umschaltung von der Arbitrationsphase 451 in die Datenphase 453 vorbereitet, wobei eine in mindestens einem Bit enthaltene Protokollformatinformation gesendet wird, welche geeignet ist, CAN XL-Rahmen gegenüber CAN-Rahmen oder CAN FD-Rahmen zu unterscheiden. Zusätzlich kann ein beispielsweise 12 Bit langer Datenlängencode (Data-Length-Code) gesendet werden, der dann zum Beispiel Werte von 1 bis zu 4096, insbesondere bis zu 2048 oder einen sonstigen Wert mit der Schrittweite von 1 annehmen kann, oder alternativ Werte von 0 bis 4095 oder höher annehmen kann. Der Datenlängencode kann auch weniger oder mehr Bit umfassen und der Wertebereich und die Schrittweite können andere Werte annehmen.

In der Datenphase 453 werden die Nutzdaten des CAN XL-Rahmens 450 bzw. der Nachricht 45 gesendet, was auch als Datenfeld der Nachricht 45 bezeichnet werden kann. Die Nutzdaten können entsprechend dem Wertebereich des Datenlängencodes, beispielsweise bis zu 4096 Bytes oder einen größeren Wert oder sonstigen beliebigen Wert, aufweisen.

In der Rahmenendphase 454 kann beispielsweise in einem Prüfsummenfeld eine Prüfsumme über die Daten der Datenphase 453 einschließlich der Stuffbits enthalten sein, die vom Sender der Nachricht 45 nach jeweils einer vorbestimmten Anzahl von gleichen Bits, insbesondere 10 gleichen Bits, als inverses Bit eingefügt werden. Zudem kann in einem Endefeld in der Rahmenendphase 454 mindestens ein Acknowledge-Bit enthalten sein. Außerdem kann eine Folge von 11 gleichen Bits vorhanden sein, welche das Ende des CAN XL-Rahmens 450 anzeigen. Mit dem mindestens einen Acknowledge-Bit kann mitgeteilt werden, ob ein Empfänger in dem empfangenen CAN XL-Rahmen 450 bzw. der Nachricht 45 einen Fehler entdeckt hat oder nicht.

Mindestens in der Arbitrationsphase 451 und der Rahmenendphase 454 wird ein Physical Layer wie bei CAN und CAN-FD verwendet. Zusätzlich kann in der Umschaltphase 452 zumindest teilweise, also am Anfang, ein Physical Layer wie bei CAN und CAN-FD verwendet werden. Der Physical Layer entspricht der Bitübertragungsschicht oder Schicht 1 des bekannten OSI-Modells (Open Systems Interconnection Modell).

Ein wichtiger Punkt während dieser Phasen 451, 452, 454 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können.

Die Arbitration am Anfang eines Rahmens 450 bzw. der Nachricht 45, 46 und das Acknowledgement in der Rahmenendphase 454 des Rahmens 450 bzw. der Nachricht 45, 46 ist nur dann möglich, wenn die Bitzeit deutlich mehr als doppelt so lang ist wie die Signal-Laufzeit zwischen zwei beliebigen Teilnehmerstationen 10, 20, 30 des Bussystems 1. Daher wird die Bitrate in der Arbitrationsphase 451, der Rahmenendphase 454 und zumindest teilweise in der Umschaltphase 452 langsamer gewählt als in der Datenphase 453 des Rahmens 450. Insbesondere wird die Bitrate in den Phasen 451, 452, 454 als 500 kbit/s gewählt, woraus eine Bitzeit von ca. 2µs folgt, wohingegen die Bitrate in der Datenphase 453 als 5 bis 10 Mbit/s oder mehr gewählt wird, woraus eine Bitzeit von ca. 0,1µs und kürzer folgt. Somit ist die Bitzeit des Signals in den anderen Kommunikationsphasen 451, 452, 454 um mindestens den Faktor 10 größer als die Bitzeit des Signals in der Datenphase 453.

Ein Sender der Nachricht 45, beispielsweise die Teilnehmerstation 10, beginnt ein Senden von Bits der Umschaltphase 452 und der anschließenden Datenphase 453 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat. Der Sender kann entweder nach einem Teil der Umschaltphase 452 auf die schnellere Bitrate und/oder den anderen Physical Layer wechseln oder erst mit dem ersten Bit, also mit dem Beginn, der anschließenden Datenphase 453 auf die schnellere Bitrate und/oder den anderen Physical Layer wechseln.

Ganz allgemein können in dem Bussystem mit CAN XL im Vergleich zu CAN oder CAN FD insbesondere folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate auf etwa 10 Megabit pro Sekunde,
c) Anheben der Größe der Nutzdaten pro Rahmen auf etwa 4kbyte oder auf einen beliebiger Wert,

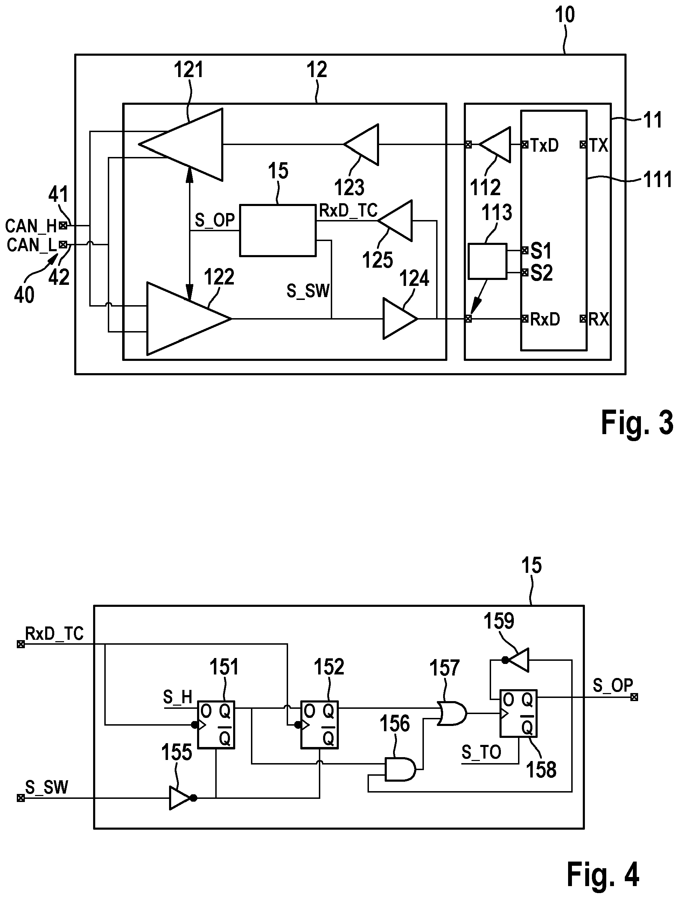

Fig. 3 zeigt den grundlegenden Aufbau der Teilnehmerstation 10 mit der Kommunikationssteuereinrichtung 11, der Sende-/Empfangseinrichtung 12 und dem Umschaltblock 15. Die Teilnehmerstation 30 ist in ähnlicher Weise aufgebaut, wie in Fig. 3 gezeigt, außer dass der Block 35 nicht in die Kommunikationssteuereinrichtung 31 integriert ist, sondern separat von der Kommunikationssteuereinrichtung 31 und der Sende-/Empfangseinrichtung 32 vorgesehen ist. Daher werden die Teilnehmerstation 30 und der Block 35 nicht separat beschrieben. Die nachfolgend beschriebenen Funktionen des Umschaltblocks 15 sind bei dem Umschaltblock 35 identisch vorhanden.

Gemäß Fig. 3 hat die Teilnehmerstation 10 zusätzlich zu der Kommunikationssteuereinrichtung 11, die als Mikrocontroller ausgestaltet ist oder einen Mikrocontroller aufweist, der Sende-/Empfangseinrichtung 12 und dem Umschaltblock 15 hat die Kommunikationssteuereinrichtung 11 zudem ein Kommunikationssteuermodul 111, einen Sendesignal-Ausgangstreiber 112 und ein RxD-Anschluss-Konfigurationsmodul 113, welche der Kommunikationssteuereinrichtung 11 zugeordnet sind. Die Kommunikationssteuereinrichtung 11 verarbeitet Signale einer beliebigen Anwendung, beispielsweise eines Steuergeräts für einen Motor, eines Sicherheitssystems für eine Maschine oder ein Fahrzeug, oder sonstige Anwendungen. Nicht gezeigt ist jedoch eine System-ASIC (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC können unter anderem die Sende-/Empfangseinrichtung 12 und eine nicht dargestellte Energieversorgungseinrichtung eingebaut sein, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern und/oder als Stromquelle ausgestaltet sein.

Die Sende-/Empfangseinrichtung 12 hat zudem einen Sender 121, einen Empfänger 122, einen Treiber 123 für das Sendesignal, einen Empfangssignal-Ausgangstreiber 124 und einen Treiber 125, der ein Signal RxD_TC an den Umschaltblock 15 ausgibt. Der Umschaltblock 15 bildet aus dem Signal RxD_TC und einem Signal S_SW, welches das Ausgangssignal des Empfängers 122 ist, ein Betriebszustand-Schaltsignal S_OP zum Schalten des Senders 121 und/oder des Empfängers 122. Das Schaltsignal S_OP kann beispielsweise in einem Bit das Schaltsignal für Sender 121 und Empfänger 122 enthalten. Alternativ kann das Schaltsignal S_OP ein zwei Bit breites Signal sein, um Sender 121 und Empfänger 122 getrennt anzusteuern, indem beispielsweise das erste Bit zum Schalten des Senders 121 und das zweite Bit zum Schalten des Empfängers 122 vorgesehen ist. Selbstverständlich sind beliebige alternative Möglichkeiten der Ausgestaltung des Schaltsignals S_OP denkbar. Der Sender 121 wird auch als Transmitter bezeichnet. Der Empfänger 122 wird auch als Receiver bezeichnet.

Der Umschaltblock 15 kann als Schaltblock ausgestaltet sein, der insbesondere mindestens ein Flipflop aufweist. Dies ist nachfolgend in Bezug auf Fig. 4 bis Fig. 8 noch genauer beschrieben.

Auch wenn nachfolgend immer von der Sende-/Empfangseinrichtung 12 gesprochen wird, ist es alternativ möglich, den Empfänger 122 in einer separaten Einrichtung extern von dem Sender 121 vorzusehen. Der Sender 121 und der Empfänger 122 können wie bei einer herkömmlichen Sende-/Empfangseinrichtung 22 aufgebaut sein. Der Sender 121 kann insbesondere mindestens einen Operationsverstärker und/oder einen Transistor aufweisen. Der Empfänger 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H und dessen zweite Busader 42 für CAN_L. Die erste und zweite Busader 41, 42 sind in der Sende-/Empfangseinrichtung 12 mit dem Sender 121 und mit dem Empfänger 122 verbunden. Die Spannungsversorgung für die Energieversorgungseinrichtung zum Versorgen der ersten und zweiten Busader 41, 42 mit elektrischer Energie erfolgt wie üblich. Außerdem ist die Verbindung mit Masse bzw. CAN_GND wie üblich realisiert. Ähnliches gilt für die Terminierung der ersten und zweiten Busader 41, 42 mit einem Abschlusswiderstand.

Im Betrieb des Bussystems 1 setzt der Sender 121 ein Sendesignal TxD der Kommunikationssteuereinrichtung 11 in entsprechende Signale CAN_H und CAN_L für die Busadern 41, 42 um und sendet diese Signale CAN_H und CAN_L auf den Bus 40. Auch wenn hier für die Sende-/Empfangseinrichtung 12 die Signale CAN_H und CAN_L genannt sind, so sind diese in Bezug auf die Nachricht 45 als Signale CAN-XL_H und CAN-XL_L zu verstehen, die in der Datenphase 453 von den herkömmlichen Signalen CAN_H und CAN_L in mindestens einem Merkmal abweichen, insbesondere in Bezug auf die Bildung der Buszustände für die verschiedenen Datenzustände des Signals TxD und/oder in Bezug auf die Spannung bzw. den Physical Layer und/oder die Bitrate.

Auf dem Bus 40 bildet sich ein Differenzsignal VDIFF = CAN_H - CAN_L aus. Mit Ausnahme eines Leerlauf- oder Bereitschaftszustands (Idle oder Standby), hört die Sende-/Empfangseinrichtung 12 mit dem Empfänger 122 im Normalbetrieb immer auf eine Übertragung von Daten bzw. Nachrichten 45, 46 auf dem Bus 40 und zwar unabhängig davon, ob die die Teilnehmerstation 10 Sender der Nachricht 45 ist oder nicht. Der Empfänger 122 bildet aus den von dem Bus 40 empfangenen Signalen CAN_H und CAN_L ein Empfangssignal RxD und gibt dieses über den Empfangssignal-Ausgangstreiber 124 an die Kommunikationssteuereinrichtung 11 weiter, wie in Fig. 3 gezeigt.

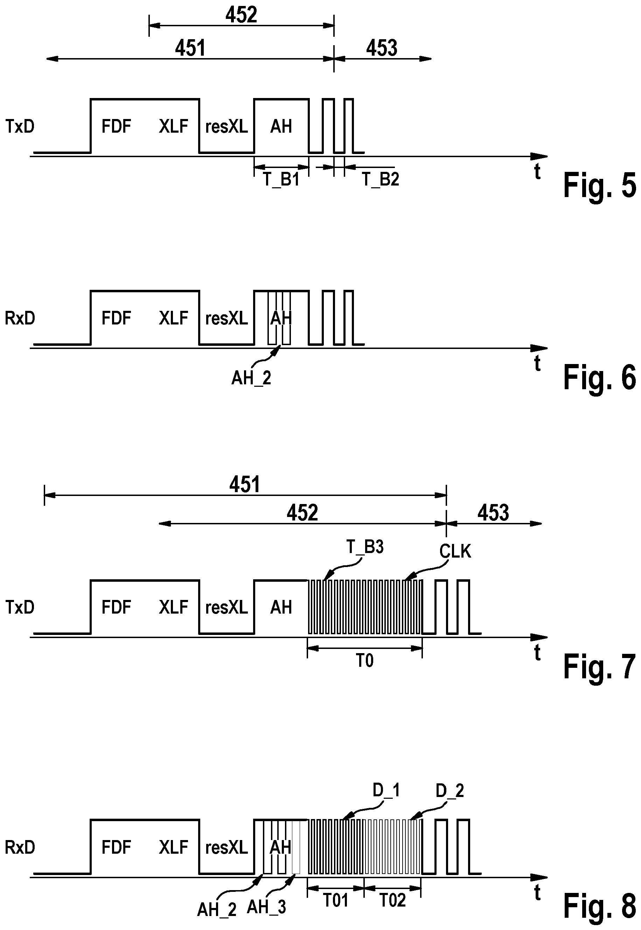

Der Umschaltblock 15 ist ausgestaltet, in einer empfangenen Nachricht 45 vom Bus 40, den Beginn der Umschaltphase 452 zu erkennen und dann die Eigenschaften der Sende-/Empfangseinrichtung 12 umzuschalten. Eine Umschaltphase ist auch zwischen der Datenphase 453 und der Rahmenendphase 454 vorgesehen, auch wenn dies in den Figuren nicht gezeigt ist. Außerdem ermöglicht der Umschaltblock 15, dass über den Anschluss für das RxD-Signal zwischen der Sende-/Empfangseinrichtung 12 und der Kommunikationssteuereinrichtung 11 bzw. dem Mikrocontroller in einer dritten Betriebsart beispielsweise Daten D_1, D_2 austauschbar sind, was in Bezug auf Fig. 7 und Fig. 8 noch genauer beschrieben wird. Der Datenaustausch ist insbesondere verwendbar, um folgende Merkmale zu realisieren:
- Rückmeldung der Sende-/Empfangseinrichtung 12 an die Kommunikationssteuereinrichtung 11 bzw. das Kommunikationssteuermodul 111 zur Signalqualität der CAN-Bus-Kommunikation,
- Austausch von sicherheitsrelevanten Daten (Safety-relevante Daten) in Bezug auf den Rahmen 450, aus dem das RxD-Signal erzeugt wurde,
- Konfigurationsmöglichkeit von Standard-Komponenten wie beispielsweise SO8-CAN-Transceiver bzw. SO8-CAN-Sende-/Empfangseinrichtung 12,
- Rückmeldung der Sende-/Empfangseinrichtung 12 an die Kommunikationssteuereinrichtung 11 bzw. das Kommunikationssteuermodul 111, dass die Umschaltung der Kommunikationsphase 451, 453 funktioniert hat, was auch als Handshake bezeichnet wird.

Das RxD-Anschluss-Konfigurationsmodul 113 konfiguriert den Anschluss RxD je nach der erforderlichen Kommunikationsrichtung unter Verwendung von Signalen S1, S2 an seinem Eingang, wie nachfolgend beschrieben. Das Signal S1 kann als RxD_out_ena bezeichnet werden, welches ein Treiben des zusätzlichen Signals RxD_TC über den RxD-Anschluss ermöglicht. Das Signal S2 kann als RxD_out_val bezeichnet werden. Je nach Wert des Signals S2 treibt die Kommunikationssteuereinrichtung 11 den Anschluss RxD zum einen an den Umschaltzeitpunkten zwischen den zwei verschiedenen Kommunikationsphasen, also zum einen zwischen Arbitrationsphase 451 und Datenphase 453 und zum anderen zwischen Datenphase 453 und Rahmenendphase 454 zur Signalisierung an die Sende-/Empfangseinrichtung 12. Zum anderen treibt die Kommunikationssteuereinrichtung 11, je nach Wert des Signals S2, den Anschluss RxD in der zuvor beschriebenen dritten Betriebsart, die auch "Talk-Mode" genannt werden kann. Ansonsten ist der Anschluss RxD, wie insbesondere bei CAN üblich, für die Kommunikationssteuereinrichtung 11 ein Eingang (Input), also kein Ausgang, wie zuvor beschrieben, so dass die Kommunikationssteuereinrichtung 11 den Anschluss RxD nicht treibt. Der Anschluss RxD kann somit mit Hilfe des RxD-Anschluss-Konfigurationsmoduls 113 und der Signale S1, S2 bidirektional betrieben werden. In anderen Worten, der Anschluss RxD ist ein bidirektionaler Anschluss.

Hierfür sind die Kommunikationssteuereinrichtung 11 und der Ausgangstreiber 124 derart ausgestaltet, dass die Kommunikationssteuereinrichtung 11 den Anschluss RxD beim Treiben zum Zweck der Signalisierung stärker treibt als der Ausgangstreiber 124. Dadurch ist vermieden, dass der Wert der RxD-Leitung unbestimmt sein könnte, wenn sowohl die Kommunikationssteuereinrichtung 11 als auch der Ausgangstreiber 124 den Anschluss RxD treibt und es zu einer Überlagerung der beiden Signal-Quellen an dem Anschluss RxD kommt. Bei einer solchen Überlagerung der beiden Signal-Quellen an dem Anschluss RxD setzt sich somit immer die Kommunikationssteuereinrichtung 11 durch. Dadurch ist der Wert der RxD-Leitung immer bestimmt.

Damit kann der Umschaltblock 15 die Möglichkeit bereitstellen, über den RxD-Anschluss zwei oder mehr Betriebsarten in der Sende-/Empfangseinrichtung 12 einzustellen, die verschiedene Betriebszustände der Sende-/Empfangseinrichtung 12 bilden. Ein zusätzlicher Anschluss an der Sende-/Empfangseinrichtung 12 und damit auch an der Kommunikationssteuereinrichtung 11 ist dafür nicht erforderlich.

Hierfür ist der Umschaltblock 15 gemäß Fig. 3 mit den zwei Eingängen versehen, über die in den Umschaltblock 15 ein Signal RxD-TC und das Signal S_SW eingespeist werden. Das Signal RxD_TC basiert auf einem Signal, das von der Kommunikationssteuereinrichtung 11 über den Anschluss für das RxD-Signal an die Sende-/Empfangseinrichtung 12 gesendet wird. Mit dem Signal RxD_TC signalisiert die Kommunikationssteuereinrichtung 11 der Sende-/Empfangseinrichtung 12 zum einen, dass die Sende-/Empfangseinrichtung 12 nun die Umschaltung in die Betriebsart für die Datenphase 453 vorzunehmen hat. Am Ende der Datenphase 453 kann die Kommunikationssteuereinrichtung 11 mit dem Signal RxD_TC die Umschaltung der Sende-/Empfangseinrichtung 12 von der Betriebsart der Datenphase 453 in die Betriebsart für die Arbitrationsphase 451 vornehmen. Außerdem können mit dem Signal RxD_TC beliebige andere Informationen von der Kommunikationssteuereinrichtung 11 an die Sende-/Empfangseinrichtung 12 gesendet werden, wie zuvor erwähnt.

Gemäß Fig. 3 führt die Sende-/Empfangseinrichtung 12 das Signal RxD_TC von dem Anschluss RxD über den Treiber 125 zum Anschluss des Umschaltblocks 15 für das Signal RxD_TC. Das Signal S_SW wird dagegen aus dem vom Bus 40 empfangenen Signal generiert. Das Signal RxD_TC wird zwischen dem Anschluss für das RxD-Signal und dem Ausgang des Empfangssignaltreibers 124 zu dem Umschaltblock 15 geleitet. Das Signal S_SW wird vom Ausgang des Empfängers 122 und vor dem Eingang des Empfangssignaltreibers 124 zu dem Umschaltblock 15 geleitet.

Gemäß einem speziellen Beispiel, das in Fig. 4 gezeigt ist, hat der Umschaltblock 15 zwei D-Flipflops 151, 152, in welche das Signal RxD_TC als Taktsignal eingegeben wird. Die beiden D-Flipflops 151, 152 reagieren auf fallende Taktflanken des Taktsignals, also des Signals RxD_TC. An dem Eingang des D-Flipflops 151 liegt zudem mit dem Signal S_H ein High-Zustand oder ein erster binärer Signalzustand an. Außerdem wird in die D-Flipflops 151, 152 das invertierte Signal S_SW als Reset eingegeben. Das Signal S_SW wird vor der Eingabe in D-Flipflops 151, 152 über einen Inverter 155 geleitet. Die D-Flipflops 151, 152 sind mit Logikgattern 156, 157 verschaltet, nämlich einem UND-Gatter 156 und einem ODER-Gatter 157. Der Ausgang des ODER-Gatters 157 wird einem D-Flipflop 158 als Taktsignal zugeführt, in welches auch ein Time-Out-Signal S_TO als Reset gespeist wird, das den Ablauf einer vorbestimmten Zeitdauer T0 anzeigt. Das Signal S_TO wird aktiv, wenn eine vorbestimmte Zeitdauer, beispielsweise 11 Bitzeiten, lang keine Flanken auf dem Bus 40 festgestellt werden. Das D-Flipflop 158 reagiert auf steigende Taktflanken. Zudem ist zwischen das D-Flipflop 158 und einen Eingang des UND-Gatters 156 ein Inverter 159 geschaltet. In dem speziellen Beispiel von Fig. 4 wird, während das Signal S_SW High ist, das dritte D-Flipflop 158 durch zwei fallende Flanken des RxD_TC Signals von 0 auf 1 geschaltet. Wenn das Flipflop 158 auf 1 steht, wird es, während das Signal S_SW High ist, durch eine fallende Flanke des RxD_TC Signals von 1 auf 0 geschaltet. Wenn das Signal S_SW Low ist, werden die beiden D-Flipflops 151, 152 zurückgesetzt und reagieren nicht auf fallende Flanken des Signals RxD_TC.

Die zuvor beschriebenen Umschaltbedingungen können selbstverständlich anders festgelegt werden, beispielsweise steigende Flanken auf dem Signal RxD_TC während das Signal S_SW Low ist. Außerdem sind andere Pegel und/oder andere Zahlen von Flanken möglich, mit anderen Schaltungen im Umschaltblock 15.

In dem speziellen Beispiel von Fig. 4 treibt das D-Flipflop 158 das binäre Betriebszustand-Schaltsignal S_OP. Wenn das Schaltsignal S_OP zwei Bit breit sein soll, oder wenn mehr als zwei Betriebszustände dargestellt werden sollen, werden zusätzliche D-Flipflops mit anderen Umschaltbedingungen benötigt als zuvor beschrieben.

Erkennt der Umschaltblock 15 die Umschaltphase 452, wird mit dem aus dem Umschaltblock 15 ausgegebenen Signal S_OP der Betriebszustand des Senders 121 und/oder des Empfängers 122 und damit die Betriebsart der Sende-/Empfangseinrichtung 12 geschaltet. Dies ist in Bezug auf Fig. 5 und Fig. 6 näher erläutert.

Gemäß Fig. 5 sendet die Kommunikationssteuereinrichtung 11 in der Umschaltphase 452 in dem Sendesignal TxD nacheinander ein FDF-Bit und ein XLF-Bit jeweils mit dem Zustand High (erster binärer Signalzustand). Danach folgt ein resXL-Bit, das mit dem Zustand Low (zweiter binärer Signalzustand) gesendet wird und von einem AH-Bit gefolgt wird, das mit dem Zustand High (erster binärer Signalzustand) gesendet wird. Danach wird am Ende der Arbitrationsphase 451 von den Bits der Arbitrationsphase 451 mit der Bitzeit T_B1 auf die kürzeren Bits der Datenphase 453 mit der Bitzeit T_B2 umgeschaltet, wie in Fig. 5 gezeigt.

Gemäß Fig. 6 sieht jedoch die Sende-/Empfangseinrichtung 12 ein Empfangssignal RxD, das in dem AH-Bit, abweichend von dem zuvor beschriebenen Verlauf des TxD-Signals von Fig. 5, zwei Low-Pulse AH_2 aufweist. Mit anderen Worten, die Kommunikationssteuereinrichtung 11 sendet über den RxD-Anschluss ein Signal RxD_TC, in welchem in dem AH-Bit eine Kennung in Form von zwei Pulsen AH_2 mit dem zweiten binären Signalzustand gesendet werden. Dadurch wird der Sende-/Empfangseinrichtung 12 signalisiert, dass von ihrer ersten Betriebsart in ihre zweite Betriebsart umzuschalten ist, um aus den folgenden Bits des Sendesignal TxD das Bussignal CAN_H, CAN_L zu erzeugen.

Die Signalisierung kann somit derart erfolgen, dass eine Folge von zwei Low-Pulsen AH_2 den Übergang von der Arbitrationsphase 451 (erste Betriebsart) in die Datenphase 452 (zweite Betriebsart) anzeigt, wie in Fig. 6 gezeigt. Danach kann die Übertragung der Daten des Datenfelds eines Rahmens 450 ausgeführt werden. Dagegen kann ein Einzelpuls den Übergang von der Datenphase 452 in die Arbitrationsphase 451, also von der zweiten Betriebsart der Sende-/Empfangseinrichtung 12 in deren erste Betriebsart, bewirken. Der Einzelpuls kann in dem Signal RxD_TC an beliebiger Stelle in dem Bit AH gesendet werden. Insbesondere, kann als Einzelpuls nur einer der Pulse AH_2 von Fig. 6 gesendet werden. Alternativ wird insbesondere ein Einzelpuls oder einzelner Puls in der Mitte des Bits AH gesendet.

Beim Übergang der Betriebsart der Sende-/Empfangseinrichtung 12 zu der Betriebsart der Arbitrationsphase 451 (erste Betriebsart) schalten Sender 121 und Empfänger 122 sofort. Beim Übergang der Betriebsart der Sende-/Empfangseinrichtung 12 zu der Betriebsart der Datenphase 453 (zweite Betriebsart) schaltet der Empfänger 122 sofort und der Sender 121 schaltet, wenn das Sendesignal TxD auf Low (zweiter Signalzustand) schaltet. Selbstverständlich sind andere Schaltbedingungen ebenfalls vorstellbar.

Fig. 7 und Fig. 8 zeigen ein Sendesignal TxD und ein Empfangssignal RxD, die beim Umschalten in eine dritte Betriebsart an der Sende-/Empfangseinrichtung 12 auftreten. Die dritte Betriebsart kann auch als "Talk-Mode" bezeichnet werden. In der dritten Betriebsart können Daten D_1, D_2 zwischen der Sende-/Empfangseinrichtung 12 und dem Mikrocontroller bzw. der Kommunikationssteuereinrichtung 11 ausgetauscht werden, so dass eine interne Kommunikation zwischen den Einrichtungen 11, 12 stattfindet. "Interne Kommunikation" bedeutet hier, dass die Daten D_1, D_2 nicht auf den Bus 40 gesendet werden. Der Mikrocontroller bzw. die Kommunikationssteuereinrichtung 11 hat somit in der dritten Betriebsart die Möglichkeit, seinen/ihren RxD-Anschluss als Ausgang zu treiben. Die Daten D_1 können sonstige Informationen von der Kommunikationssteuereinrichtung 11 für die Sende-/Empfangseinrichtung 12 enthalten, wie bereits zuvor erwähnt. Die Daten D_2 können sonstige Informationen von der Kommunikationssteuereinrichtung 11 für die Sende-/Empfangseinrichtung 12 enthalten, wie bereits zuvor erwähnt.

Für die Umschaltung in die dritte Betriebsart sendet die Kommunikationssteuereinrichtung 11 in dem Signal RxD_TC zum Beispiel einen dritten Low-Puls AH_3 an die Sende-/Empfangseinrichtung 12. Dadurch schaltet die Kommunikationssteuereinrichtung 11 mittels dem Modul 111 die Sende-/Empfangseinrichtung 12 für eine vorbestimmte Zeitdauer T0 in ihre dritte Betriebsart. In der dritten Betriebsart wird bei der Sende-/Empfangseinrichtung 12 der Ausgangstreiber bzw. Sender 121 abgeschaltet, damit die Kommunikation zwischen der Kommunikationssteuereinrichtung 11 und der Sende-/Empfangseinrichtung 12 den Bus 40 nicht stört. Nach Ablauf der vorbestimmten Zeitdauer T0, was durch eine festgelegte Zahl von Taktsignalflanken vorgegeben wird, wird die Sende-/Empfangseinrichtung 12 von ihrer dritten Betriebsart in ihre zuvor beschriebene zweite Betriebsart geschaltet, wie in Fig. 7 und Fig. 8 veranschaulicht. Damit beginnt die Übertragung der Daten des Datenfelds (Datenphase 453).

Gemäß dem Beispiel von Fig. 7 und Fig. 8 sendet die Kommunikationssteuereinrichtung 11 in der dritten Betriebsart der Sende-/Empfangseinrichtung 12 mittels des TxD-Anschlusses ein Taktsignal CLK mit einer Bitzeit T_B3 an die Sende-/Empfangseinrichtung 12. Die Bitzeit T_B3 ist kleiner oder kürzer als die Bitzeit T_B2. Die Bitzeit T_B3 ist kleiner oder kürzer als die Bitzeit T_B1. Dies ist möglich, wenn die Bitrate T_B2 der Datenphase 453 nicht auf das Maximum der Sende-/Empfangseinrichtung 12 konfiguriert ist. Grund dafür könnte beispielsweise sein, dass der Kabelbaum des Busses 40 die hohe Bitrate nicht erlaubt, die eine Bitzeit T_B3 zur Folge hat. Sind jedoch die Anschlüsse RxD und TxD sowie die Signalpfade für die maximale Bitrate T_B2 der Datenphase 453 ausgelegt, können die Bits in der dritten Betriebsart nicht kürzer sein. Während der ersten x Takte des Taktsignals CLK, die während einer Zeitdauer T01 gesendet werden, wird die RxD-Leitung bzw. der Anschluss RxD der Sende-/Empfangseinrichtung 12 in der einen Richtung betrieben. Für die restlichen y Takte, die während einer Zeitdauer T02 gesendet werden, wird die RxD-Leitung bzw. der Anschluss RxD der Sende-/Empfangseinrichtung 12 in der anderen Richtung betrieben. Somit kann beispielsweise zuerst die Kommunikationssteuereinrichtung 11 die Daten D_1 an die Sende-/Empfangseinrichtung 12 senden und dann die Sende-/Empfangseinrichtung 12 die Daten D_2 an die Kommunikationssteuereinrichtung 11 senden, wie in Fig. 8 veranschaulicht.

Die vorbestimmte Zeitdauer T0 besteht aus der Summe von x und y Takten des Taktsignals CLK. Somit gilt T0 = T01 + T02. Die Zahlenwerte für x bzw. T01 und y bzw. T02 können gleich oder unterschiedlich sein. Die Zahlenwerte für x und y sind applikationsspezifisch einstellbar. Alternativ sind die Zahlenwerte für die Zeitdauern T01, T02 applikationsspezifisch einstellbar. Alternativ kann die Reihenfolge der Kommunikationsrichtungen anders gewählt werden. Demzufolge können alternativ zuerst die Daten D_2 und dann erst die Daten D_1 in der Zeitdauer T01 gesendet werden.

Der beschriebene Datenaustausch wird mit einer Taktrate betrieben, welche zu der Bitzeit-Anforderung der späteren Datenphase 453 passt, insbesondere zu einer Bitzeit T_B2 für eine Datenrate von etwa 10Mbit/s. Die Taktrate an dem Anschluss TxD und dem Anschluss RxD der Einrichtungen 11, 12, und somit die Taktrate des Taktsignals CLK, liegt bei dem genannten Beispiel somit bei 10MHz. Grundsätzlich kann die Taktrate jedoch applikationsspezifisch eingestellt werden.

Wie bereits erwähnt, wird das Taktsignal CLK durch den die Kommunikationssteuereinrichtung 11 auf der TxD-Leitung gesendet. Die Kommunikationssteuereinrichtung 11verfügt über eine ausreichend genaue Takt-Referenz. Während der Zeitdauer T01 empfängt die Sende-/Empfangseinrichtung 12 an dem Anschluss RxD die Daten D_1 synchron zu dem Taktsignal CLK. Während der Zeitdauer T02 sendet die Sende-/Empfangseinrichtung 12 an dem Anschluss RxD die Daten D_2 synchron zu dem Taktsignal CLK. Alternativ kann der RxD Anschluss das Taktsignal CLK übertragen und der TxD Anschluss die Daten D_1.

Als Folge davon ist keine galvanische Verbindung durch jeweils einen zusätzlichen Anschluss an der Kommunikationssteuereinrichtung 11 und der damit verbundenen Sende-/Empfangseinrichtung 12 erforderlich, damit die Kommunikationssteuereinrichtung 11 den Zeitpunkt der Bitraten-Umschaltung oder sonstigen Daten D_1, D_2 an die Sende-/Empfangseinrichtung 12 übertragen kann. Das heißt, der Block 15 benötigt vorteilhaft keinen zusätzlichen Anschluss, der an einem Standardgehäuse der Sende-/Empfangseinrichtung 12 nicht verfügbar ist. Somit ist durch den Block 15 kein Wechsel auf ein anderes größeres und kostenintensives Gehäuse notwendig, um einen zusätzlichen Anschluss bereitzustellen.

Außerdem ermöglicht der Betriebsart-Umschaltbock 15, dass keine Integration einer Protokoll-Controller-Funktionalität in der Sende-/Empfangseinrichtung 12 erforderlich ist. Ein solcher Protocol-Controller könnte unter anderem die Umschaltphase 452 der Nachricht 45 erkennen und abhängig davon die Datenphase 453 einleiten. Da ein solcher zusätzlicher Protokoll-Controller jedoch beachtlich Fläche in der Sende-/Empfangseinrichtung 12 oder dem ASIC benötigen würde, bewirkt der Betriebsart-Umschaltbock 15 eine deutliche Senkung des Ressourcenbedarfs.

Dadurch bietet die Verschaltung des Betriebsart-Umschaltbocks 15 mit einer üblichen Sende-/Empfangseinrichtung eine sehr unaufwändige und kostengünstige Lösung, um der Sende-/Empfangseinrichtung 12 kenntlich zu machen, dass eine Umschaltung und welche Umschaltung zwischen ihren verschiedenen Betriebsarten vorzunehmen ist, nämlich insbesondere von der ersten Betriebsart in die zweite Betriebsart oder von der ersten Betriebsart in die dritte Betriebsart oder von der zweiten Betriebsart in die erste Betriebsart oder eine sonstige Umschaltung von Betriebsarten.

Durch die beschriebene Ausgestaltung der Sende-/Empfangseinrichtung(en) 12, 32 können in der Datenphase 452 weit höhere Datenraten als mit CAN oder CAN-FD erreicht werden. Zudem kann die Datenlänge in dem Datenfeld der Datenphase 453 beliebig gewählt werden, wie zuvor beschrieben. Dadurch können die Vorteile von CAN in Bezug auf die Arbitrierung beibehalten und dennoch eine größere Anzahl von Daten in kürzerer Zeit als bisher sehr sicher und damit effektiv übertragen werden, das heißt, ohne dass eine Wiederholung der Daten aufgrund eines Fehlers notwendig wäre, wie nachfolgend erläutert.

Ein weiterer Vorteil besteht darin, dass Fehlerrahmen in dem Bussystem 1 bei der Übertragung von Nachrichten 45 nicht benötigt werden, jedoch optional verwendet werden können. Werden keine Fehlerrahmen verwendet, werden Nachrichten 45 nicht mehr zerstört, was eine Ursache für die Notwendigkeit einer Doppelübertragung von Nachrichten beseitigt. Dadurch steigt die Nettodatenrate.

Ist das Bussystem kein CAN Bussystem, kann der Betriebsart-Umschaltblock 15, 35 ausgelegt werden oder sein, auf andere Umschaltsignale zu reagieren. In diesem Fall kann der Betriebsart-Umschaltblock 15, 35 abhängig von einem Ergebnis seiner Auswertung den Sender 121 und/oder den Empfänger 122 in eine von mindestens zwei verschiedenen Betriebsarten schalten und mindestens eine der Betriebsarten nach Ablauf einer bei dem Betriebsart-Umschaltblock 15, 35 voreingestellten Zeitdauer T0 in eine andere der Betriebsarten umschalten.

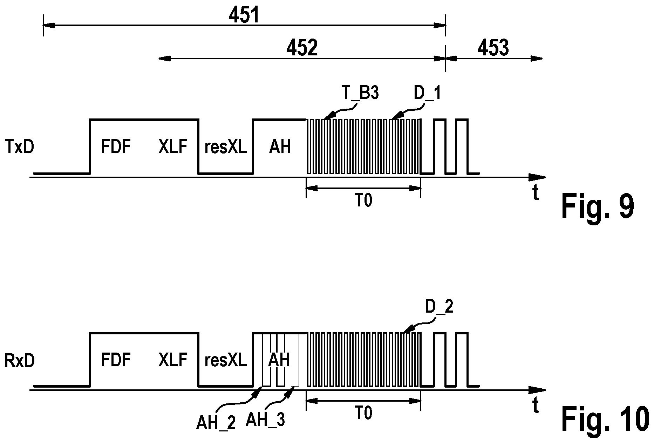

Fig. 9 und Fig. 10 zeigen Signalverläufe des TxD-Signals und des RxD-Signals bei einem zweiten Ausführungsbeispiel am Übergang zwischen Arbitrationsphase 451 und der Datenphase 453.

Gemäß dem Beispiel von Fig. 9 und Fig. 10 wird sowohl auf der TxD- als auch auf der RxD-Leitung eine Manchester-Kodierung verwendet. Dabei können am Anschluss TxD Daten D_1 zu der Sende-/Empfangseinrichtung 12 übertragen werden. Dagegen werden am Anschluss RxD Daten D_2 zum Mikrocontroller bzw. der Kommunikationssteuereinrichtung 11 übertragen. Die beiden Datenrichtungen können alternativ umgekehrt sein.

Zur Dekodierung der Daten D_1 am Anschluss TxD der Sende-/Empfangseinrichtung 12 verwendet die Sende-/Empfangseinrichtung 12 das Prinzip der Taktrückgewinnung. Der auf diese Weise erhaltene Takt CLK wird zugleich als Sendetakt für die am Anschluss RxD gesendeten Daten D_2 verwendet.

Ansonsten ist das Bussystem 1 bei dem zweiten Ausführungsbeispiel auf die gleiche Weise aufgebaut, wie zuvor in Bezug auf das erste Ausführungsbeispiel beschrieben.

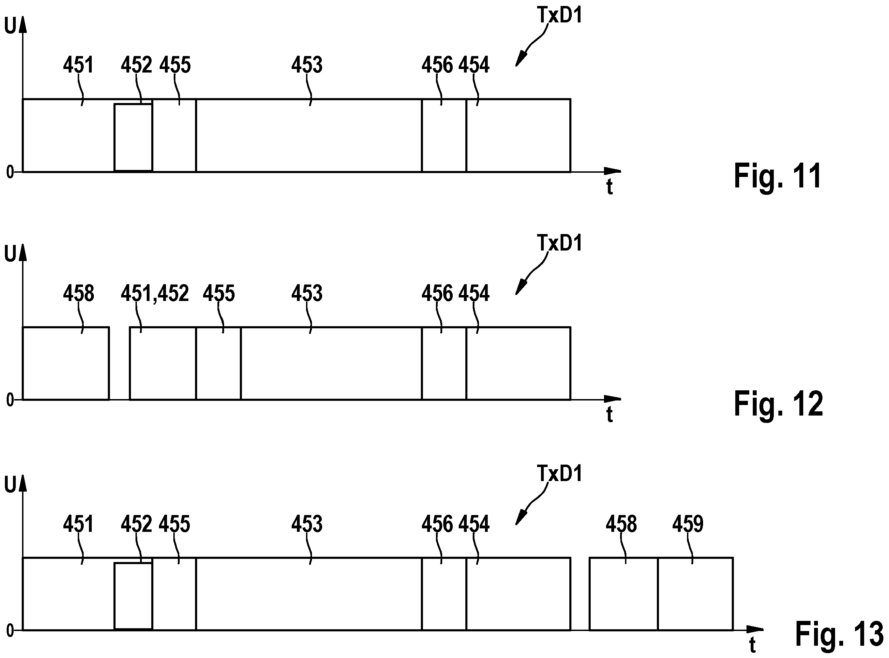

Fig. 11 zeigt für eine Nachricht 45 vereinfacht ein Sendesignal TxDl, wie es von der Sende-/Empfangseinrichtung 12 oder der Sende-/Empfangseinrichtung 32 gemäß einem dritten Ausführungsbeispiel von der zugehörigen Kommunikationssteuereinrichtung 11, 31 empfangen wird. Das Sendesignal TxD1 ist für die CAN-Kommunikation auf dem Bus 40 in unterschiedliche Kommunikationsphasen 451 bis 456 unterteilt, nämlich die Arbitrationsphase 451, die Umschaltphase 452, die am Ende der Arbitrationsphase 451 liegt, die Datenphase 453 und die Rahmenendphase 454 sowie eine erste interne Kommunikationsphase 455 und eine zweite interne Kommunikationsphase 456. Das resultierende Empfangssignal am Anschluss RxD ist entsprechend aufgebaut.

Die erste interne Kommunikationsphase 455 ist zwischen der Umschaltphase 452 und der Datenphase 453 angeordnet. Die zweite interne Kommunikationsphase 456 ist zwischen der Datenphase 453 und der Rahmenendphase 454 angeordnet. Die erste interne Kommunikationsphase 455 kann für die Übertragung von Daten D_1 zur Steuerung der Sende-/Empfangseinrichtung 12 oder der Sende-/Empfangseinrichtung 32 durch die zugehörigen Kommunikationssteuereinrichtung 11, 31 genutzt werden. Die zweite interne Kommunikationsphase 456 kann für die Übertragung von Daten D_2 für eine Rückmeldung (Feedback) der Sende-/Empfangseinrichtung 12 oder der Sende-/Empfangseinrichtung 32 an die zugehörigen Kommunikationssteuereinrichtung 11, 31 genutzt werden.

Ansonsten kann die Kommunikation in den Teilnehmerstation 10, 30 und in dem Bussystem 1 erfolgen, wie in Bezug auf das erste oder zweite Ausführungsbeispiel beschrieben.

Fig. 12 zeigt für eine Nachricht 45 vereinfacht das Sendesignal TxDl, wie es von der Sende-/Empfangseinrichtung 12 oder der Sende-/Empfangseinrichtung 32 gemäß einem vierten Ausführungsbeispiel von der zugehörigen Kommunikationssteuereinrichtung 11, 31 empfangen wird. Das Sendesignal TxD1 ist aufgebaut, wie in Bezug auf Fig. 11 zuvor beschrieben. Noch dazu geht dem Sendesignal TxD1 eine Konfigurationsphase 458 voraus, die zeitlich länger sein kann als die zeitliche Länge der Phasen 455, 456 zusammen.

Während die Sende-/Empfangseinrichtung 12 oder der Sende-/Empfangseinrichtung 32 in der Konfigurationsphase 458 oder in der Konfigurationsbetriebsart ist, können keine CAN (XL) Nachrichten 45 übertragen werden. Daher wird die Sende-/Empfangseinrichtung 12 oder der Sende-/Empfangseinrichtung 32 nur dann in die Konfigurationsbetriebsart geschaltet, wenn auf die Kommunikation über den Bus 40 verzichtet werden kann. Eine solche Zeit liegt beispielsweise in der Initialisierungsphase nach dem Einschalten des Bussystems 1 vor, bevor die Kommunikation auf dem Bus 40 gestartet wird.

Die Konfigurationsphase 458 und damit die Konfigurationsbetriebsart dürfen beliebig lange dauern und beliebig viele Daten D_1, D_2 übertragen. Beispielsweise können als Daten D_1, D_2 zusätzlich oder alternativ die Einstellungen übertragen werden, die für selektive Weckfunktionen (Wakeup-Funktionen) nach ISO 11898-6 notwendig sind. Es können zusätzlich oder alternativ Status-Informationen und Fehlercodes aus der jeweiligen Sende-/Empfangseinrichtung 12, 32 ausgelesen werden.

Die Umschaltung in die Konfigurationsphase 458 und damit die Konfigurationsbetriebsart erfolgt ähnlich wie die anderen Umschaltungen, beispielsweise. durch zwei von der Kommunikationssteuereinrichtung 11 bzw. ihrem Modul 111 getriebene '0'-Pulse oder Low-Pulse, während der Transceiver den ,1'-Pegel oder High-Pegel ausgibt, wie zuvor in Bezug auf Fig. 5 bis Fig. 10 genauer beschrieben.

Dadurch kann die Zeit für den internen Datenaustausch bzw. die interne Kommunikation in mindestens einer der Teilnehmerstationen 10, 30 verlängert werden, ohne die Nutzdatenrate der CAN XL Kommunikation herabsetzen. Dies ist ein Vorteil im Vergleich zu den vorangehenden Ausführungsbeispielen, bei welchen bei der internen Kommunikation in den Teilnehmerstationen 10, 30 in den Phasen 455, 456 nur wenige Bits übertragen werden.

Ansonsten kann die Kommunikation in den Teilnehmerstation 10, 30 und in dem Bussystem 1 erfolgen, wie in Bezug auf das erste oder zweite Ausführungsbeispiel beschrieben.

Fig. 13 zeigt für eine Nachricht 45 vereinfacht das Sendesignal TxDl, wie es von der Sende-/Empfangseinrichtung 12 oder der Sende-/Empfangseinrichtung 32 gemäß einem fünften Ausführungsbeispiel von der zugehörigen Kommunikationssteuereinrichtung 11, 31 empfangen wird. Das Sendesignal TxD1 ist aufgebaut, wie in Bezug auf Fig. 11 zuvor beschrieben. Im Unterschied zu dem Beispiel von Fig. 12 folgt dem Sendesignal TxD1 im Betrieb des Bussystems 1 eine Idle-Phase 459, die zeitlich länger sein kann als die zeitliche Länge der Phasen 455, 456 zusammen.

In der Idle-Phase 459 befindet sich der Bus 40 im Leerlaufzustand (Idle-State), in welcher über den Bus 40 keine CAN (XL) Nachrichten 45 übertragen werden. Daher kann auch in der Idle-Phase 459 die Konfigurationsbetriebsart, insbesondere in einer Phase 458 oder der Phase 459, eingeschaltet werden. In diesem Fall muss sich die Kommunikationssteuereinrichtung 11 bzw. ihr Kommunikationssteuermodul 111 nach dem Ende der Konfigurationsbetriebsart wieder neu in die Kommunikation auf dem Bus 40 integrieren bzw. auf die nächsten Idle-Phase 459 des Busses 40 warten.

Somit kann auch hier, wie bei dem Beispiel von Fig. 12, die Konfigurationsbetriebsart beliebig lange dauern, so dass beliebig viele Daten D_1, D_2 übertragen werden können. Optional ist die maximale Zeitdauer für die Konfigurationsbetriebsart während einer Idle-Phase 459 des Busses 40 an den Einrichtungen 11, 12 bzw. 31, 32 einstellbar.

Ansonsten gilt dasselbe, wie zuvor für die Kommunikation in den Teilnehmerstationen 10, 30 und in dem Bussystem 1 in Bezug auf das vorangehende Ausführungsbeispiel beschrieben.

Gemäß einem sechsten Ausführungsbeispiel ist der Betriebsart-Umschaltblock 15 aufgebaut, mehr als drei Pulse oder ein vorbestimmtes Pulsmuster als Kennung zu verwenden. Ein derartiges Pulsmuster könnte beispielsweise eine Folge von zwei Low-Pulsen, zwei High-Zuständen mit der Zeitdauer eines Low-Pulses und einem anschließenden Low-Puls sein. Selbstverständlich sind andere Pulsmuster verwendbar. In den genannten Ausgestaltungen kann der Umschaltblock 15 für die Sende-/Empfangseinrichtung 12 jeweils mehr als drei Betriebsarten einstellen, die sich in mindestens einem Merkmal voneinander unterscheiden.

Gemäß einem ersten Beispiel für die Ausgestaltung von mehr als drei Betriebsarten kann in einer dritten Betriebsart eine Übertragung von Daten D_1, D_2 erfolgen, wie in Bezug auf das erste Ausführungsbeispiel beschrieben. In einer vierten Betriebsart kann eine Übertragung von Daten D_1, D_2 erfolgen, wie in Bezug auf das zweite Ausführungsbeispiel beschrieben.

Gemäß einem zweiten Beispiel für die Ausgestaltung von mehr als drei Betriebsarten kann in einer dritten Betriebsart eine Übertragung nur von Daten D_1 erfolgen, wie in Bezug auf das erste oder zweite Ausführungsbeispiel beschrieben. Danach kann auf die zuvor beschriebene zweite Betriebsart umgeschaltet werden. Nach einer vorbestimmten Zeitdauer, oder bei einem bestimmten Ereignis, kann die Übertragung des Datenfelds durch Umschalten in eine vierte Betriebsart unterbrochen werden, um eine Übertragung von Daten D1 und/oder D_2 vorzunehmen, wie in Bezug auf das erste oder zweite Ausführungsbeispiel beschrieben.

Selbstverständlich sind andere Beispiele für die Ausgestaltung von mehr als drei Betriebsarten denkbar.

Bei allen Varianten sind die beschriebenen Optionen selbstverständlich als beliebig viele Betriebsarten applikationsspezifisch definierbar und konfigurierbar.

Ansonsten ist das Bussystem 1 bei dem sechsten Ausführungsbeispiel auf die gleiche Weise aufgebaut, wie zuvor in Bezug auf eines der vorangehenden Ausführungsbeispiele beschrieben.

Alle zuvor beschriebenen Ausgestaltungen der Blöcke 15, 35, der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Sende-/Empfangseinrichtung (12; 32) für eine Teilnehmerstation (10; 30) eines seriellen Bussystems (1), mit
einem ersten Anschluss zum Empfang eines Sendesignals (TxD) von einer Kommunikationssteuereinrichtung (11; 31),
einem Sender (121) zum Senden des Sendesignals (TxD) auf einen Bus (40) des Bussystems (1), bei welchem Bussystem (1) zum Austausch von Nachrichten (45; 46) zwischen Teilnehmerstationen (10, 20, 30) des Bussystems (1) mindestens eine erste Kommunikationsphase (451, 452, 454) und eine zweite Kommunikationsphase (453) verwendet werden,
einem Empfänger (122) zum Empfang des Signals von dem Bus (40), wobei der Empfänger (122) ausgestaltet ist, aus dem von dem Bus (40) empfangenen Signal ein digitales Empfangssignal (RxD) zu erzeugen, und
einem zweiten Anschluss zum Senden des digitalen Empfangssignals (RxD) an die Kommunikationssteuereinrichtung (11; 31) und zum Empfang eines zusätzlichen Signals (RxD_TC) von der Kommunikationssteuereinrichtung (11; 31),
**gekennzeichnet durch**
einen Betriebsart-Umschaltblock (15; 35) zur Auswertung des von dem Empfänger (122) ausgegebenen Empfangssignals (S_SW) und eines an dem zweiten Anschluss von der Kommunikationssteuereinrichtung (11; 31) empfangenen Signals (RxD_TC),
wobei der Betriebsart-Umschaltblock (15; 35) ausgestaltet ist, den Sender (121) und/oder den Empfänger (122) abhängig von einem Ergebnis der Auswertung in eine von mindestens zwei verschiedenen Betriebsarten zu schalten und mindestens eine vorbestimmte Betriebsart der Betriebsarten nach Ablauf einer Zeitdauer (T0), die bei dem Betriebsart-Umschaltblock (15; 35) für eine zusätzliche interne Kommunikation zwischen der Kommunikationssteuereinrichtung (11; 31) und der Sende-/Empfangseinrichtung (12; 32) über den zweiten Anschluss voreinstellbar ist, in eine andere der Betriebsarten umzuschalten.

2. Sende-/Empfangseinrichtung (12; 32) nach Anspruch 1,
wobei der Betriebsart-Umschaltblock (15; 35) ausgestaltet ist, den Sender (121) und/oder den Empfänger (122) abhängig von einem Ergebnis der Auswertung in eine von mindestens drei verschiedenen Betriebsarten zu schalten und mindestens eine vorbestimmte Betriebsart der drei Betriebsarten nach Ablauf einer bei dem Betriebsart-Umschaltblock (15; 35) voreingestellten Zeitdauer (T0) in eine andere der mindestens drei Betriebsarten umzuschalten, und
wobei die mindestens eine vorbestimmte Betriebsart die interne Kommunikation zwischen der Kommunikationssteuereinrichtung (11; 31) und der Sende-/Empfangseinrichtung (12; 32) über den zweiten Anschluss realisiert.

3. Sende-/Empfangseinrichtung (12; 32) nach Anspruch 1 oder 2, wobei der Betriebsart-Umschaltblock (15; 35) ausgestaltet ist, den Sender (121) in der mindestens einen vorbestimmten Betriebsart abzuschalten.

4. Sende-/Empfangseinrichtung (12; 32) nach einem der vorangehenden Ansprüche, wobei der Sender (121) ausgestaltet ist, in der ersten Kommunikationsphase (451) Bits der Signale auf den Bus (40) mit einer ersten Bitzeit (T_B1) zu treiben, die um mindestens den Faktor 10 größer als eine zweite Bitzeit (T_B2) von Bits ist, die der Sender (121) in der zweiten Kommunikationsphase (453) auf den Bus (40) treibt.

5. Sende-/Empfangseinrichtung (12; 32) nach Anspruch 4, wobei die Signale über den ersten und zweiten Anschluss in der vorbestimmten Betriebsart Bits mit einer dritten Bitzeit (T_B3) haben, die kleiner als die zweite Bitzeit (T_B2) ist.

6. Sende-/Empfangseinrichtung (11; 12; 31; 32) nach einem der vorangehenden Ansprüche, wobei die mindestens eine vorbestimmte Betriebsart aufweist eine Betriebsart, in welcher die Sende-/Empfangseinrichtung (12; 32) kein Sendesignal (TxD) auf den Bus (40) treibt.

7. Sende-/Empfangseinrichtung (11; 12; 31; 32) nach einem der vorangehenden Ansprüche, wobei das in der ersten Kommunikationsphase (451, 452, 454) von dem Bus (40) empfangene Signal mit einem anderen Physical Layer erzeugt ist als das in der zweiten Kommunikationsphase (453) von dem Bus (40) empfangene Signal, und/oder
wobei in der ersten Kommunikationsphase (451, 452, 454) ausgehandelt wird, welche der Teilnehmerstationen (10, 20, 30) des Bussystems (1) in der nachfolgenden zweiten Kommunikationsphase (453) einen zumindest zeitweise exklusiven, kollisionsfreien Zugriff auf den Bus (40) bekommt.

8. Kommunikationssteuereinrichtung (11; 31) für eine Teilnehmerstation (10; 30) eines seriellen Bussystems (1), mit
einem Kommunikationssteuermodul (111) zum Erzeugen eines Sendesignals (TxD) zum Steuern einer Kommunikation der Teilnehmerstation (10; 30) mit mindestens einer anderen Teilnehmerstation (10; 20; 30) des Bussystems (1), bei welchem Bussystem (1) zum Austausch von Nachrichten (45; 46) zwischen Teilnehmerstationen (10, 20, 30) des Bussystems (1) mindestens eine erste Kommunikationsphase (451, 452, 454) und eine zweite Kommunikationsphase (453) verwendet werden,
einem ersten Anschluss zum Senden des Sendesignals (TxD) an eine Sende-/Empfangseinrichtung (12; 32), die zum Senden des Sendesignals (TxD) auf einen Bus (40) des Bussystems (1) ausgestaltet ist, und
einem zweiten Anschluss zum Empfangen eines digitalen Empfangssignals (RxD) von der Sende-/Empfangseinrichtung (12; 32),
**dadurch gekennzeichnet,**
**dass** die Kommunikationssteuereinrichtung (11; 31) zum Erzeugen eines zusätzlichen Signals (RxD_TC) ausgestaltet ist, welches der Sende-/Empfangseinrichtung (12; 32) anzeigt, dass von der derzeitigen Betriebsart in eine andere Betriebsart von mindestens zwei verschiedenen Betriebsarten zu schalten ist, und welches zusätzlich für eine bei dem Kommunikationssteuermodul (111) und einem Betriebsart-Umschaltblock (15; 35) der Sende-/Empfangseinrichtung (12; 32) voreinstellbare Zeitdauer (T0) eine interne Kommunikation zwischen dem Kommunikationssteuermodul (111) und der Sende-/Empfangseinrichtung (12; 32) realisiert, und
**dass** das Kommunikationssteuermodul (111) ausgestaltet ist, das zusätzliche Signal (RxD_TC) über den zweiten Anschluss an die Sende-/Empfangseinrichtung (12; 32) zu senden.

9. Einrichtung (11; 12; 31; 32) nach einem der vorangehenden Ansprüche, wobei die voreingestellte Zeitdauer (T0) in eine erste Zeitdauer (T01), in welcher der zweite Anschluss derart betrieben wird, dass die Kommunikationssteuereinrichtung (11; 31) über den zweiten Anschluss Daten (D_1) senden kann, und eine zweite Zeitdauer (T02) aufgeteilt ist, in welcher die Kommunikationssteuereinrichtung (11; 31) über den zweiten Anschluss Daten (D_2) empfängt, und
wobei die in der voreingestellten Zeitdauer (T0) gesendeten Daten (D_1, D_2) Daten sind, die Zusatzinformationen zu den Signalen sind, die in dem Bussystem (1) zum Austausch von Nachrichten (45) zwischen Teilnehmerstationen (10; 30) des Bussystems (1) erzeugt werden.

10. Kommunikationssteuereinrichtung (11; 12; 31; 32) nach Anspruch 8 oder 9, wobei die mindestens eine vorbestimmte Betriebsart aufweist
eine Betriebsart, in welcher die Kommunikationssteuereinrichtung (11; 31) ausgestaltet ist, über den ersten Anschluss ein Taktsignal (CLK) zu senden und im Takt des Taktsignals (CLK) über den zweiten Anschluss zumindest zeitweise Daten (D_1) zu senden und zumindest zeitweise Daten (D_2) zu empfangen, und/oder
eine Betriebsart, in welcher die Kommunikationssteuereinrichtung (11; 31) ausgestaltet ist, zum Datenaustausch mit der Sende-/Empfangseinrichtung (12; 32) eine Manchester-Kodierung für die Daten (D_1, D_2) zu verwenden.

11. Kommunikationssteuereinrichtung (11; 12; 31; 32) nach Anspruch 10, wobei die Kommunikationssteuereinrichtung (11; 31) ausgestaltet ist, bei Senden einer Protokollinformation an dem ersten Anschluss für das Sendesignal (TxD), die eine Umschaltung von der mindestens einen ersten Kommunikationsphase (451, 452, 454) in die zweite Kommunikationsphase (453) signalisiert, an dem Anschluss für das digitale Empfangssignal (RxD) eine Kennung (AH_2; AH_3) mit einem vorbestimmten Wert an den Empfänger (122) zu senden.

12. Kommunikationssteuereinrichtung (11; 12; 31; 32) nach Anspruch 11, wobei die Kennung (AH_2; AH_3) ein Bit mit einem vorbestimmten Wert oder Pulsmuster ist.

13. Kommunikationssteuereinrichtung (11; 12; 31; 32) nach Anspruch 11, wobei die Kennung (AH_2; AH_3) ein vorbestimmtes Bitmuster ist.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Sende-/Empfangseinrichtung (12; 32) nach einem der Ansprüche 1 bis 7 und eine Kommunikationssteuereinrichtung (11; 31) nach Anspruch 8 bis 13 aufweist.

15. Verfahren zur Kommunikation in einem seriellen Bussystem (1), wobei das Verfahren mit einer Teilnehmerstation (10; 30) für ein Bussystem (1) ausgeführt wird, bei welchem zum Austausch von Nachrichten (45; 46) zwischen Teilnehmerstationen (10, 20, 30) des Bussystems (1) mindestens eine erste Kommunikationsphase (451, 452, 454) und eine zweite Kommunikationsphase (453) verwendet werden, wobei die Teilnehmerstation (10; 30) einen Sender (121), einen Empfänger (122), einen ersten Anschluss und einen zweiten Anschluss aufweist, und wobei das Verfahren die Schritte aufweist, Empfangen, mit dem Empfänger (122), eines Signals von dem Bus (40) des Bussystems (1), und
Erzeugen, mit dem Empfänger (122), aus dem von dem Bus (40) empfangenen Signal eines digitalen Empfangssignals (RxD) und Ausgeben des digitalen Empfangssignals (RxD) an dem zweiten Anschluss,
**gekennzeichnet durch** die Schritte
Auswerten, mit einem Betriebsart-Umschaltblock (15; 35) der Teilnehmerstation (10; 30), des von dem Empfänger (122) ausgegebenen Empfangssignals (S_SW) und eines an dem zweiten Anschluss von der Kommunikationssteuereinrichtung (11; 31) empfangenen Signals (RxD_TC), und Schalten, mit dem Betriebsart-Umschaltblock (15; 35), des Senders (121) und/oder des Empfängers (122) abhängig von einem Ergebnis der Auswertung in eine von mindestens zwei verschiedenen Betriebsarten und Umschalten von mindestens einer vorbestimmten Betriebsart der Betriebsarten nach Ablauf einer Zeitdauer (T0), die bei dem Betriebsart-Umschaltblock (15; 35) für eine zusätzliche interne Kommunikation zwischen dem Kommunikationssteuermodul (111) und der Sende-/Empfangseinrichtung (12; 32) über den zweiten Anschluss voreingestellt ist, in eine andere der Betriebsarten.

## Claims

1. Transmitting/receiving device (12; 32) for a subscriber station (10; 30) of a serial bus system (1), having
a first connection for receiving a transmission signal (TxD) from a communication control device (11; 31),
a transmitter (121) for transmitting the transmission signal (TxD) onto a bus (40) of the bus system (1), in which bus system (1) at least one first communication phase (451, 452, 454) and a second communication phase (453) are used to interchange messages (45; 46) between subscriber stations (10, 20, 30) of the bus system (1),
a receiver (122) for receiving the signal from the bus (40), wherein the receiver (122) is configured to generate a digital reception signal (RxD) from the signal received from the bus (40), and
a second connection for transmitting the digital reception signal (RxD) to the communication control device (11; 31) and for receiving an additional signal (RxD_TC) from the communication control device (11; 31),
**characterized by**
an operating mode switching block (15; 35) for evaluating the reception signal (S_SW) output by the receiver (122) and a signal (RxD_TC) received at the second connection from the communication control device (11; 31),
wherein the operating mode switching block (15; 35) is configured to switch the transmitter (121) and/or the receiver (122) into one of at least two different operating modes on the basis of a result of the evaluation and to switch at least one predetermined operating mode of the operating modes to another of the operating modes after expiry of a period of time (T0) which can be preset in the operating mode switching block (15; 35) for additional internal communication between the communication control device (11; 31) and the transmitting/receiving device (12; 32) via the second connection.

2. Transmitting/receiving device (12; 32) according to Claim 1,
wherein the operating mode switching block (15; 35) is configured to switch the transmitter (121) and/or the receiver (122) into one of at least three different operating modes on the basis of a result of the evaluation and to switch at least one predetermined operating mode of the three operating modes into another of the at least three operating modes after expiry of a period of time (T0) which is preset in the operating mode switching block (15; 35), and
wherein the at least one predetermined operating mode implements the internal communication between the communication control device (11; 31) and the transmitting/receiving device (12; 32) via the second connection.

3. Transmitting/receiving device (12; 32) according to Claim 1 or 2, wherein the operating mode switching block (15; 35) is configured to switch off the transmitter (121) in the at least one predetermined operating mode.

4. Transmitting/receiving device (12; 32) according to one of the preceding claims, wherein the transmitter (121) is configured, in the first communication phase (451), to drive bits of the signals onto the bus (40) with a first bit time (T_B1) that is greater at least by a factor of 10 than a second bit time (T_B2) of bits which are driven by the transmitter (121) onto the bus (40) in the second communication phase (453).

5. Transmitting/receiving device (12; 32) according to Claim 4, wherein the signals via the first and second connections in the predetermined operating mode have bits with a third bit time (T_B3) which is shorter than the second bit time (T_B2).

6. Transmitting/receiving device (11; 12; 31; 32) according to one of the preceding claims, wherein the at least one predetermined operating mode has an operating mode in which the transmitting/receiving device (12; 32) does not drive a transmission signal (TxD) onto the bus (40) .

7. Transmitting/receiving device (11; 12; 31; 32) according to one of the preceding claims,
wherein the signal received from the bus (40) in the first communication phase (451, 452, 454) is generated with a different physical layer than the signal received from the bus (40) in the second communication phase (453), and/or
wherein it is negotiated, in the first communication phase (451, 452, 454), which of the subscriber stations (10, 20, 30) of the bus system (1) at least temporarily receives exclusive, collision-free access to the bus (40) in the subsequent, second communication phase (453).

8. Communication control device (11; 31) for a subscriber station (10; 30) of a serial bus system (1), having
a communication control module (111) for generating a transmission signal (TxD) for controlling communication between the subscriber station (10; 30) and at least one other subscriber station (10; 20; 30) of the bus system (1), in which bus system (1) at least one first communication phase (451, 452, 454) and a second communication phase (453) are used to interchange messages (45; 46) between subscriber stations (10, 20, 30) of the bus system (1),
a first connection for transmitting the transmission signal (TxD) to a transmitting/receiving device (12; 32) which is configured to transmit the transmission signal (TxD) onto a bus (40) of the bus system (1), and
a second connection for receiving a digital reception signal (RxD) from the transmitting/receiving device (12; 32), **characterized**
**in that** the communication control device (11; 31) is configured to generate an additional signal (RxD_TC) which indicates to the transmitting/receiving device (12; 32) that it is necessary to switch from the current operating mode to another operating mode of at least two different operating modes and which additionally implements internal communication between the communication control module (111) and the transmitting/receiving device (12; 32) for a period of time (T0) that can be preset in the communication control module (111) and in an operating mode switching block (15; 35) of the transmitting/receiving device (12; 32), and in that the communication control module (111) is configured to transmit the additional signal (RxD_TC) to the transmitting/receiving device (12; 32) via the second connection.

9. Device (11; 12; 31; 32) according to one of the preceding claims, wherein the preset period of time (T0) is divided into a first period of time (T01), in which the second connection is operated in such a manner that the communication control device (11; 31) can transmit data (D_1) via the second connection, and a second period of time (T02), in which the communication control device (11; 31) receives data (D_2) via the second connection, and
wherein the data (D_1, D_2) transmitted in the preset period of time (T0) are data which are additional items of information relating to the signals which are generated in the bus system (1) for the purpose of interchanging messages (45) between subscriber stations (10; 30) of the bus system (1).

10. Communication control device (11; 12; 31; 32) according to Claim 8 or 9, wherein the at least one predetermined operating mode has an operating mode in which the communication control device (11; 31) is configured to transmit a clock signal (CLK) via the first connection and to at least temporarily transmit data (D_1)and to at least temporarily receive data (D_2) via the second connection in time with the clock signal (CLK), and/or
an operating mode in which the communication control device (11; 31) is configured to use Manchester coding for the data (D_1, D_2) in order to interchange data with the transmitting/receiving device (12; 32).

11. Communication control device (11; 12; 31; 32) according to Claim 10, wherein the communication control device (11; 31) is configured, when transmitting an item of protocol information at the first connection for the transmission signal (TxD), which information signals switching from the at least one first communication phase (451, 452, 454) to the second communication phase (453), to transmit an identifier (AH_2; AH_3) with a predetermined value to the receiver (122) at the connection for the digital reception signal (RxD).

12. Communication control device (11; 12; 31; 32) according to Claim 11, wherein the identifier (AH_2; AH_3) is a bit with a predetermined value or pulse pattern.

13. Communication control device (11; 12; 31; 32) according to Claim 11, wherein the identifier (AH_2; AH_3) is a predetermined bit pattern.

14. Bus system (1) having
a bus (40), and
at least two subscriber stations (10; 20; 30) which are connected to one another via the bus (40) in such a manner that they can communicate serially with one another and at least one subscriber station (10; 30) of which has a transmitting/receiving device (12; 32) according to one of Claims 1 to 7 and a communication control device (11; 31) according to Claims 8 to 13.

15. Method for communicating in a serial bus system (1), wherein the method is carried out using a subscriber station (10; 30) for a bus system (1) in which at least one first communication phase (451, 452, 454) and a second communication phase (453) are used to interchange messages (45; 46) between subscriber stations (10, 20, 30) of the bus system (1), wherein the subscriber station (10; 30) has a transmitter (121), a receiver (122), a first connection and a second connection, and wherein the method has the steps of
using the receiver (122) to receive a signal from the bus (40) of the bus system (1), and
using the receiver (122) to generate a digital reception signal (RxD) from the signal received from the bus (40) and to output the digital reception signal (RxD) at the second connection, **characterized by** the steps of
using an operating mode switching block (15; 35) of the subscriber station (10; 30) to evaluate the reception signal (S_SW) output by the receiver (122) and a signal (RxD_TC) received at the second connection from the communication control device (11; 31), and
using the operating mode switching block (15; 35) to switch the transmitter (121) and/or the receiver (122) to one of at least two different operating modes on the basis of a result of the evaluation, and to switch at least one predetermined operating mode of the operating modes to another of the operating modes after expiry of a period of time (T0) which is preset in the operating mode switching block (15; 35) for additional internal communication between the communication control module (111) and the transmitting/receiving device (12; 32) via the second connection.

## Revendications

1. Dispositif émetteur/récepteur (12 ; 32) pour une station d'abonné (10 ; 30) d'un système de bus série (1), comprenant
une première connexion pour recevoir un signal d'émission (TxD) d'un dispositif de commande de communication (11 ; 31),
un émetteur (121) pour émettre le signal d'émission (TxD) sur un bus (40) du système de bus (1), dans lequel système de bus (1) au moins une première phase de communication (451, 452, 454) et une deuxième phase de communication (453) sont utilisées pour échanger des messages (45 ; 46) entre des stations d'abonné (10, 20, 30) du système de bus (1),
un récepteur (122) pour recevoir le signal du bus (40), le récepteur (122) étant configuré pour générer un signal de réception numérique (RxD) à partir du signal reçu du bus (40), et
une deuxième connexion pour émettre le signal de réception numérique (RxD) au dispositif de commande de communication (11 ; 31) et pour recevoir un signal supplémentaire (RxD_TC) du dispositif de commande de communication (11 ; 31),
**caractérisé par**
un bloc de commutation de mode de fonctionnement (15 ; 35) pour évaluer le signal de réception (S_SW) sorti par le récepteur (122) et un signal (RxD_TC) reçu au niveau de la deuxième connexion en provenance du dispositif de commande de communication (11 ; 31),
dans lequel le bloc de commutation de mode de fonctionnement (15 ; 35) est configuré pour commuter l'émetteur (121) et/ou le récepteur (122) sur l'un d'au moins deux modes de fonctionnement différents en fonction d'un résultat de l'évaluation, et pour commuter au moins un mode de fonctionnement prédéterminé des modes de fonctionnement sur un autre des modes de fonctionnement après écoulement d'une durée (T0) qui peut être préréglée par l'intermédiaire de la deuxième connexion au niveau du bloc de commutation de mode de fonctionnement (15 ; 35) pour une communication interne supplémentaire entre le dispositif de commande de communication (11 ; 31) et le dispositif émetteur/récepteur (12 ; 32).

2. Dispositif émetteur/récepteur (12 ; 32) selon la revendication 1,
dans lequel le bloc de commutation de mode de fonctionnement (15 ; 35) est configuré pour commuter l'émetteur (121) et/ou le récepteur (122) en fonction d'un résultat de l'évaluation sur l'un parmi au moins trois modes de fonctionnement différents, et pour commuter au moins un mode de fonctionnement prédéterminé des trois modes de fonctionnement sur un autre des au moins trois modes de fonctionnement après écoulement d'une durée (T0) préréglée au niveau du bloc de commutation de mode de fonctionnement (15 ; 35), et
dans lequel ledit au moins un mode de fonctionnement prédéterminé réalise la communication interne entre le dispositif de commande de communication (11 ; 31) et le dispositif émetteur/ récepteur (12 ; 32) par l'intermédiaire de la deuxième connexion.

3. Dispositif émetteur/récepteur (12 ; 32) selon la revendication 1 ou 2, dans lequel le bloc de commutation de mode de fonctionnement (15 ; 35) est configuré pour arrêter l'émetteur (121) dans ledit au moins un mode de fonctionnement prédéterminé.

4. Dispositif émetteur/récepteur (12 ; 32) selon l'une quelconque des revendications précédentes, dans lequel, dans la première phase de communication (451), l'émetteur (121) est configuré pour pousser des bits des signaux sur le bus (40) avec un premier temps bit (T_B1) qui est supérieur d'un facteur 10 à un deuxième temps bit (T_B2) des bits que l'émetteur (121) pousse sur le bus (40) dans la deuxième phase de communication (453) .

5. Dispositif émetteur/récepteur (12 ; 32) selon la revendication 4, dans lequel les signaux passant par la première et la deuxième connexion dans le mode de fonctionnement prédéterminé présentent des bits ayant un troisième temps bit (T_B3) qui est inférieur au deuxième temps bit (T_B2).

6. Dispositif émetteur/récepteur (11 ; 12 ; 31 ; 32) selon l'une quelconque des revendications précédentes, dans lequel ledit au moins un mode de fonctionnement prédéterminé présente un mode de fonctionnement dans lequel le dispositif émetteur/récepteur (12 ; 32) ne pousse aucun signal d'émission (TxD) sur le bus (40).

7. Dispositif émetteur/récepteur (11 ; 12 ; 31 ; 32) selon l'une quelconque des revendications précédentes,
dans lequel le signal reçu en provenance du bus (40) dans la première phase de communication (451, 452, 454) est généré avec une autre couche physique que le signal reçu en provenance du bus (40) dans la deuxième phase de communication (453), et/ou
dans lequel, dans la première phase de communication (451, 452, 454), il est négocié laquelle des stations d'abonné (10, 20, 30) du système de bus (1) obtiendra dans la deuxième phase de communication (453) consécutive un accès au bus (40) sans collision, au moins temporairement exclusif.

8. Dispositif de commande de communication (11 ; 31) pour une station d'abonné (10 ; 30) d'un système de bus série (1), comprenant
un module de commande de communication (111) pour générer un signal d'émission (TxD) pour commander une communication de la station d'abonné (10 ; 30) avec au moins une autre station d'abonné (10 ; 20 ; 30) du système de bus (1), dans lequel système de bus (1) au moins une première phase de communication (451, 452, 454) et une deuxième phase de communication (453) sont utilisées pour échanger des messages (45 ; 46) entre des stations d'abonné (10, 20, 30) du système de bus (1)
une première connexion pour émettre le signal d'émission (TxD) à un dispositif émetteur/récepteur (12 ; 32) qui est configuré pour émettre le signal d'émission (TxD) sur un bus (40) du système de bus (1), et
une deuxième connexion pour recevoir un signal de réception numérique (RxD) du dispositif émetteur/ récepteur (12 ; 32),
**caractérisé**
**en ce que** le dispositif de commande de communication (11 ; 31) est configuré pour générer un signal supplémentaire (RxD_TC) qui indique au dispositif émetteur/récepteur (12 ; 32) qu'il faut commuter du mode de fonctionnement actuel sur un autre mode de fonctionnement parmi au moins deux modes de fonctionnement différents, et qui réalise en outre pendant une durée (T0) préréglable au niveau du module de commande de communication (111) et d'un bloc de commutation de mode de fonctionnement (15 ; 35) du dispositif émetteur/ récepteur (12 ; 32) une communication interne entre le module de commande de communication (111) et le dispositif émetteur/récepteur (12 ; 32), et
**en ce que** le module de commande de communication (111) est configuré pour émettre le signal supplémentaire (RxD_TC) au dispositif émetteur/ récepteur (12 ; 32) par l'intermédiaire de la deuxième connexion.

9. Dispositif (11 ; 12 ; 31 ; 32) selon l'une quelconque des revendications précédentes, dans lequel la durée préréglée (T0) est divisée en une première durée (T01) pendant laquelle la deuxième connexion fonctionne de telle sorte que le dispositif de commande de communication (11 ; 31) peut émettre des données (D_1) par l'intermédiaire de la deuxième connexion, et en une deuxième durée (T02) pendant laquelle le dispositif de commande de communication (11 ; 31) reçoit des données (D_2) par l'intermédiaire de la deuxième connexion, et
dans lequel les données (D_1, D_2) émises pendant la durée préréglée (T0) sont des données qui sont des informations supplémentaires pour les signaux qui sont générés dans le système de bus (1) afin d'échanger des messages (45) entre les stations d'abonné (10 ; 30) du système de bus (1).

10. Dispositif de commande de communication (11 ; 12 ; 31 ; 32) selon la revendication 8 ou 9, dans lequel ledit au moins un mode de fonctionnement prédéterminé présente
un mode de fonctionnement dans lequel le dispositif de commande de communication (11 ; 31) est configuré pour émettre un signal d'horloge (CLK) par l'intermédiaire de la première connexion et pour émettre au rythme du signal d'horloge (CLK) au moins temporairement des données (D_1) et pour recevoir au moins temporairement des données (D_2) par l'intermédiaire de la deuxième connexion, et/ou
un mode de fonctionnement dans lequel le dispositif de commande de communication (11 ; 31) est configuré pour utiliser un codage Manchester pour les données (D_1, D_2) en vue de l'échange de données avec le dispositif émetteur/récepteur (12 ; 32).

11. Dispositif de commande de communication (11 ; 12 ; 31 ; 32) selon la revendication 10, dans lequel, lors de l'émission d'une information de protocole au niveau de la première connexion pour le signal d'émission (TxD), qui signale une commutation de ladite au moins une première phase de communication (451, 452, 454) à la deuxième phase de communication (453), le dispositif de commande de communication (11 ; 31) est configuré pour émettre au récepteur (122) au niveau de la connexion un identifiant (AH_2 ; AH_3) d'une valeur prédéterminée pour le signal de réception numérique (RxD).

12. Dispositif de commande de communication (11 ; 12 ; 31 ; 32) selon la revendication 11, dans lequel l'identifiant (AH_2 ; AH_3) est un bit ayant une valeur prédéterminée ou un modèle d'impulsion.

13. Dispositif de commande de communication (11 ; 12 ; 31 ; 32) selon la revendication 11, dans lequel l'identifiant (AH_2 ; AH_3) est un modèle binaire prédéterminé.

14. Système de bus (1), comprenant
un bus (40), et
au moins deux stations d'abonné (10 ; 20 ; 30) qui sont reliées ensemble par l'intermédiaire du bus (40) de façon à pouvoir communiquer ensemble en série, et dont au moins une station d'abonné (10 ; 30) présente un dispositif émetteur/récepteur (12 ; 32) selon l'une quelconque des revendications 1 à 7 et un dispositif de commande de communication (11 ; 31) selon les revendications 8 à 13.

15. Procédé de communication dans un système de bus série (1), dans lequel le procédé est effectué avec une station d'abonné (10 ; 30) pour un système de bus (1), dans lequel au moins une première phase de communication (451, 452, 454) et une deuxième phase de communication (453) sont utilisées pour échanger des messages (45 ; 46) entre des stations d'abonné (10, 20, 30) du système de bus (1), dans lequel la station d'abonné (10 ; 30) présente un émetteur (121), un récepteur (122), une première connexion et une deuxième connexion, et dans lequel le procédé présente les étapes consistant à
recevoir, par le récepteur (122), un signal du bus (40) du système de bus (1), et
générer, par le récepteur (122), un signal de réception numérique (RxD) à partir du signal reçu en provenance du bus (40), et sortir le signal de réception numérique (RxD) au niveau de la deuxième connexion,
**caractérisé par** les étapes consistant à
évaluer, par un bloc de commutation de mode de fonctionnement (15 ; 35) de la station d'abonné (10 ; 30), le signal de réception (S_SW) sorti par le récepteur (122) et un signal (RxD_TC) reçu au niveau de la deuxième connexion en provenance du dispositif de commande de communication (11 ; 31), et
commuter, par le bloc de commutation de mode de fonctionnement (15 ; 35), l'émetteur (121) et/ou le récepteur (122) en fonction d'un résultat de l'évaluation sur l'un d'au moins deux modes de fonctionnement différents, et pour commuter d'au moins un mode de fonctionnement prédéterminé des modes de fonctionnement sur un autre des modes de fonctionnement après écoulement d'une durée (T0) qui est préréglée par l'intermédiaire de la deuxième connexion au niveau du bloc de commutation de mode de fonctionnement (15 ; 35) pour une communication interne supplémentaire entre le module de commande de communication (111) et le dispositif émetteur/récepteur (12 ; 32).
